Europäisches Patentamt

European Patent Office

Office européen des brevets

(19)

(11) Veröffentlichungsnummer: **0 400 354**
**A2**

## (12) EUROPÄISCHE PATENTANMELDUNG

(21) Anmeldenummer: 90108523.3

(51) Int. Cl.5: **G06F 15/40**

(22) Anmeldetag: 07.05.90

(30) Priorität: 26.05.89 EP 89109521

(43) Veröffentlichungstag der Anmeldung:
**05.12.90 Patentblatt 90/49**

(84) Benannte Vertragsstaaten:
**AT BE CH DE DK ES FR GB GR IT LI LU NL SE**

(71) Anmelder: **Liebel, Franz-Peter, Dr.**
**Am Petersberg 61**
**D-4800 Bielefeld(DE)**

(72) Erfinder: **Liebel, Franz-Peter, Dr.**
**Am Petersberg 61**
**D-4800 Bielefeld(DE)**

(54) Verfahren zur Ermittlung der Wahrscheinlichkeiten fehlerhafter Betriebszustände und der Wahrscheinlichkeiten kausaler Vorgänge bei technischen und biologischen Systemen.

(57) Das Verfahren hat zwei Zielsetzungen:

1. Berechnung der Wahrscheinlichkeiten fehlerhafter Betriebszustände.

2. Berechnung der Wahrscheinlichkeiten, daß ein beliebiger, mit einer Wahrscheinlichkeit $p \leq 1$ vorliegender Systemzustand A einen als Folge in Betracht kommenden Systemzustand B erzeugt. Daraus ergibt sich auch die Möglichkeit zur Berechnung der Wahrscheinlichkeiten von Kausalketten. Das Verfahren ist anwendbar für die Diagnostik bei Menschen, Tieren, Pflanzen und bei technischen Systemen, sowie für die Ermittlung kausaler Zusammenhänge, vor allem in der Pharmakologie und Epidemiologie.

Aus einfachen Bauelementen wird ein Kausalnetz aufgebaut, für dessen einzelne Netzknoten die Zutreffenswahrscheinlichkeiten unter Berücksichtigung aller relevanten Einflüsse, inbesondere der gegenseitigen Wechselwirkungen der Netzknoten, berechnet werden.

Die für die Berechnungen benötigten Wahrscheinlichkeits-Zahlenwerte werden aus Stichproben gewonnen, die günstigerweise jeweils unter der Bedingung des Vorliegens eines konkreten Systemzustands und für eine begrenzte Netzumgebung erhoben werden.

## B) Verwendbarkeit der Erfindung

Die Erfindung wird für folgende Aufgaben verwendet:

1.

Berechnung der Wahrscheinlichkeiten pathophysiologischer Zustände bei Menschen, Tieren und Pflanzen anhand der festgestellten Symptome oder Merkmale.

2.

Berechnung der Wahrscheinlichkeiten fehlerhafter Betriebszustände bei technischen Anlagen, insbesondere bei Computersystemen, wie bei Ziffer 1. anhand der festgestellten Merkmale.

3.

Berechnung der Wahrscheinlichkeit, daß bei einem technischen oder biologischen System ein beliebiger Systemzustand A, der auch mit einer Wahrscheinlichkeit kleiner Eins vorliegen darf, einen als mögliche Folge in Betracht kommenden Systemzustand B erzeugt. Daraus ergibt sich auch die Möglichkeit, die Wahrscheinlichkeiten von Kausalketten zu berechnen.

4.

Mit der Verwendungsmöglichkeit der Ziffer 3. erhält man insbesondere eine Antwort auf die epidemiologische Fragestellung, welche der möglichen, mit einer Wahrscheinlichkeit $p \leq 1$ vorliegenden Ursachen eines festgestellten Systemzustands die größte Wahrscheinlichkeit dafür aufweist, daß sie eben diesen Systemzustand nach sich zieht.

Eine Einschränkung der Verwendbarkeit ergibt sich jedoch dadurch, daß ein praktischer Einsatz nur dann zu realisieren ist, wenn zur Ermittlung von Wahrscheinlichkeitswerten statistisches Material in genügend großem Umfang bereitgestellt werden kann. Dieses statistische Material besteht im wesentlichen aus einer Sammlung sicher diagnostizierter Fälle, wobei neben der Angabe der Diagnose auch Angaben über das Vorliegen oder Nicht-Vorliegen einer Anzahl von Merkmalen erforderlich werden.

## C) Stand der Technik und Vorteile des Verfahrens

I) Bei bestehenden Konzeptionen berechnet man die Wahrscheinlichkeit eines Elementes A aus der zugelassenen Hypothesenmenge dadurch, daß man das Vorliegen der möglicherweise von A verursachten Merkmale heranzieht.
Verbesserung:
Das vorliegende Verfahren berücksichtigt bei der Berechnung der Zutreffenswahrscheinlichkeit von Netzknoten alle Umgebungs-Netzknoten, insbesondere also auch solche Knoten, deren Zutreffenswahrscheinlichkeit selbst erst berechnet werden soll.

II) Bisher besteht keine Möglichkeit, bei einer nichttrivialen Situation den tatsächlichen Verursacher eines konkreten Systemzustands zu ermitteln.
Verbesserung:
Nach der Ermittlung der Zutreffenswahrscheinlichkeiten für alle Knoten des Kausalnetzes, erlaubt es das vorliegende Verfahren, für jeden beliebigen kausalen Erzeugungsvorgang A ---> B, wobei A auch ein Verbund von Netzknoten mit Wahrscheinlichkeiten kleiner Eins sein darf, die Wahrscheinlichkeit dafür zu bestimmen, daß dieser Vorgang zutrifft.

III) Für bestehende Konzepte werden Stichproben eingesetzt, bei denen jede Stichprobenausführung Angaben zu allen zugelassenen Merkmalen enthalten muß.
Verbesserung:

- Es werden nur "bedingte" Stichproben benötigt, d.h. Stichproben unter der Bedingung des Vorliegens eines konkreten Systemzustands.
- Die Stichproben müssen nur Angaben zu einer eng begrenzten Anzahl von Merkmalen aufweisen.

D) Darstellung der Lösung und Beispiele

1. Uebersicht

Das Verfahren wird in vier Schritte gegliedert:

Schritt 1

Das problemrelevante Wissen wird in ein Kausalnetz eingebracht, das ein möglichst wirklichkeitsgetreu nachgebildetes Modell der Geschehnisse sein soll, die sich in dem betrachteten biologischen oder technischen System ereignen. Für jeden Systemzustand sind damit die ihn umgebenden und seine Zutreffenswahrscheinlichkeit beeinflussenden Netzknoten erfaßt.

Schritt 2

Für jeden Knoten des Kausalnetzes, der nicht unmittelbar gemessen oder beobachtet werden kann, wird aus dem Vorliegen der ihn umgebenden Netzknoten die Wahrscheinlichkeit seines Zutreffens berechnet. Entscheidendes Hilfsmittel ist dabei der sogenannte L-Satz, der in der europäischen Patentanmeldung mit der Veröffentlichungsnummer 0 281 682 enthalten ist, und der die Aufstellung eines Gleichungssystems ermöglicht. Dieses Gleichungssystem erlaubt die Berechnung aller noch nicht bekannten Netzknotenwahrscheinlichkeiten, wobei berücksichtigt ist, daß sich alle Netzknoten mit einer Wahrscheinlichkeit ungleich Null oder Eins in ihrer Zutreffenswahrscheinlichkeit wechselseitig beeinflussen.

Schritt 3

Für die in dem aufgestellten Gleichungssystem enthaltenen Wahrscheinlichkeiten sind Zahlenwerte erforderlich, die aus Stichproben gewonnen werden. Dazu müssen die Verbundwahrscheinlichkeiten, die zahlreiche Ereignisse enthalten, in Produkte von Wahrscheinlichkeiten kleineren Umfangs zerlegt werden, obwohl solche Ereignisse im allgemeinen nicht stochastisch unabhängig sind.

Schritt 4

Sind für alle Knoten des Kausalnetzes die Zutreffenswahrscheinlichkeiten berechnet oder gemessen, so besteht die Möglichkeit, für einen beliebigen, mit einer Wahrscheinlichkeit $p \leq 1$ vorliegenden Systemzustand die Wahrscheinlichkeit dafür zu berechnen, daß sich aus diesem Systemzustand ein bestimmter Folgezustand ergibt. Vorauszusetzen sind dabei allerdings eine ganze Reihe von Eigenschaften, die jedoch bei real existierenden biologischen oder technischen Systemen weitgehend vorliegen.

2. Aufbau des Kausalnetzes

2.1. Vorbemerkungen

Betrachtet man einen lebenden Organismus oder ein aus zahlreichen, teilweise selbstständig arbeitenden Komponenten zusammengesetztes maschinelles System, so lassen sich an beliebig wählbaren Punkten Betriebszustände feststellen, die durch Regelmechanismen innerhalb definierter Intervalle gehalten werden. Jeder zeitlich andauernde Betriebszustand außerhalb des jeweiligen Norm-Intervalls stellt eine nicht regulierbare Störung dar. Eine solche Störung ist verursacht durch Einflüsse innerhalb oder außerhalb des Systems, und sie ist als irregulärer Zustand im allgemeinen selbst wieder Ursache für nachfolgende irreguläre Zustände.

Setzt man die Stationarität der fehlerhaften Betriebszustände voraus, so liefert deren kausale Vernetzung unmittelbar ein Modell der Abfolge pathologischer Zustände in dem betrachteten System. Die Komplexität der Geschehnisse, bei biologischen Systemen insbesondere die Vielfalt zellulärer Vorgänge, bedingen hierbei die Verwendung zusammenfassender, makroskopisch beobachtbarer Zustände.

2.2. Bauelemente

Die Netzknoten des zu erstellenden Kausalnetzes bestehen aus
- der Nummer und dem Namen des Netzknotens,
- beliebig vielen hinführenden Kausalverweisen mit Angabe des verursachenden Netzknotens,
- beliebig vielen wegführenden Kausalverweisen mit Angabe des verursachten Netzknotens,
- den Uebergangs-Schaltstellen der wegführenden Kausalverweise mit Angabe derjenigen Netzknoten, die den betreffenden Uebergang hemmend beeinflussen.

```
                 hinführende Kausalverweise


      Netzknoten-Typ
      und Netzknoten-Nr.      H5 □    U3 □
                                              Netzknoten, der einen
      (zusätzlich                             Uebergang hemmend be-
      Netzknoten-Namen)                       einflußt


                                          ⌐⌐ Schaltstelle


                 wegführende Kausalverweise
```

Abb.2.1:

Schema eines Netzknotens des L-Netzes.

Es werden Netzknoten verwendet, die nur hinführende, nur wegführende oder hin- und wegführende Kausalverweise besitzen. Außerdem unterscheiden sich die Netzknoten dadurch, daß ihre Zutreffenswahrscheinlichkeit direkt gemessen bzw. beobachtet werden kann, oder aber anhand der umgebenden Netzknoten berechnet werden muß. Eine Einteilung der Netzknoten wird deshalb wie folgt vorgenommen:

| Netzknoten-Typ | Abkürzung | Kausalverweise (KV) | direkte Messung |
|---|---|---|---|
| Hypothesen-Netzknoten | H-Knoten | stets wegführende KV, beliebig viele hinführende KV. | nein |
| Evidence-Netzknoten | E-Knoten | nur hinführende KV. | ja |
| Ursache-Netzknoten | U-Knoten | stets wegführende KV, beliebig viele hinführende KV. | ja |
| Leitsymptom-Netzknoten | L-Knoten | stets hinführende KV, beliebig viele wegführende KV. | ja |

Abb.2.2.:

Uebersicht der im L-Netz verwendeten Netzknoten-Typen.

Die Menge der H-Knoten, die Menge der E-Knoten und die Menge der U-Knoten wird jeweils durchnummeriert. Zusätzlich zur Festlegung des Netzknoten-Typs und der Netzknoten-Nr. erhält jeder Netzknoten einen Namen, der eine möglichst kurze und eindeutige Charakterisierung des betreffenden Systemzustands darstellt.

Die verschiedenen Netzknoten-Typen und das Einfügen von Schaltstellen an wegführenden Kausalverweisen werden an einem Beispiel demonstriert. Nicht direkt meßbare Netzknoten sind durch ⊡ besonders gekennzeichnet.

Abb.2.3:

Beispiel eines Netzausschnitts mit H-, E-, U-, L-Knoten.

## 2.3. Aufbau-Prinzipien

### 2.3.1. Wertungsumgebung WERT($H_{u0}$)

Für einen beliebigen H-Knoten $H_{u0}$ des zu erstellenden Kausalnetzes soll die Menge derjenigen Netzknoten angegeben werden, die für die Zutreffenswahrscheinlichkeit von $H_{u0}$ von Bedeutung sind. Hierzu werden zunächst folgende Bezeichnungen festgelegt:

WERT($H_{u0}$) Menge aller Netzknoten mit Einfluß auf die Zutreffenswahrscheinlichkeit von $H_{u0}$.

URS($H_{u0}$) Menge der unmittelbaren Ursachen von $H_{u0}$.

FOL($H_{u0}$) Menge der unmittelbaren Folgen von $H_{u0}$.

DIFF($H_{u0}$) Menge der von $H_{u0}$ verschiedenen Netzknoten, die unmittelbare Ursache für Elemente aus FOL-($H_{u0}$) sind.

(DIFF($H_{u0}$) umfaßt diejenigen Netzknoten, die differentialdiagnostisch zu $H_{u0}$ in Betracht zu ziehen sind.)

INH(Z) Menge der Netzknoten, die über Schaltstellen die auf einen beliebigen Knoten Z hinführenden Kausalverbindungen inhibitorisch beeinflussen.

Damit wird die Wertungsumgebung wie folgt festgelegt:

$$\mathrm{WERT}(H_{\mu_0}) := \mathrm{URS}(H_{\mu_0}) \cup \mathrm{FOL}(H_{\mu_0}) \cup \mathrm{DIFF}(H_{\mu_0})$$

$$\cup \mathrm{INH}(H_{\mu_\bullet}) \cup \bigcup_{X \in \mathrm{FOL}(H_{\mu_0})} \mathrm{INH}(X).$$

### 2.3.2. Begrenzung des L-Netzes

Durch die Strukturen der für das Kausalnetz vorgesehenen Netzknoten ist bereits die Art der Vernetzung vorgegeben. Man geht vom Leitsymptom-Knoten (L-Knoten) aus und bringt Netzknoten so lange an unbesetzten Kausalverweisen oder an Schaltstellen an, bis alle Möglichkeiten der Netzerweiterung ausgeschöpft sind.

Orientiert man sich nun an der gestellten Aufgabe, nämlich der Ermittlung der Ursachen des Leitsymptoms bzw. der Ermittlung einer Kausalkette, an deren Ende das Leitsymptom steht, so ist sofort erkennbar, daß weit von einer solche Kausalkette entfernte Netzknoten für diese Aufgabe kaum noch von Bedeutung sind. Es besteht deshalb die Möglichkeit, die Fortsetzung des Netzes an geeigneten Stellen abzubrechen, ohne daß die Erledigung der Aufgabe wesentlich beeinträchtigt wird. Hierzu wird zunächst definiert:

### Definition (L-Netz)

Ein Kausalnetz, das von einem Leitsymptom-Knoten (L-Knoten) aus dadurch aufgebaut wird, daß die in Abschnitt 2.2. definierten Bauelemente so lange an Kausalverweisen und Schaltstellen angebracht werden, bis eine beliebig festlegbare Ausdehnung erreicht ist, heißt L-Netz.

Es werden folgende Begrenzungsvorschriften vorgeschlagen die je nach Aufgabenstellung verändert werden können:

### Begrenzungsvorschrift 1

Die wegführenden Kausalverweise des L-Knotens und der U-Knoten werden nicht mit Netzknoten besetzt.

### Begrenzungsvorschrift 2

Die wegführenden Kausalverweise von H-Knoten, die nicht zu einer zum L-Knoten führenden Kausalkette gehören, werden zusammen mit den zugehörigen Schaltstellen nur mit direkt meßbaren Knoten vervollständigt.

### Begrenzungsvorschrift 3

Die hinführenden Kausalverweise von E- bzw. U-Knoten werden nur dann weiter verfolgt, wenn diese Knoten eine unmittelbare Ursache besitzen, die zu einer zum L-Knoten führenden Kausalkette gehört.

### Begrenzungsvorschrift 4

Die hinführenden Kausalverweise von H-Knoten, die nicht zu einer zum L-Knoten führenden Kausalkette gehören, und deren unmittelbare Ursachen ebenfalls nicht Teil einer zum L-Knoten führenden Kausalkette sind, werden zusammen mit den zugehörigen Schaltstellen nur mit direkt meßbaren Knoten besetzt.

Begrenzungsvorschrift 5

Eine zum L-Knoten führende Kausalkette kann auf eine beliebige Anzahl von Knoten festgelegt werden.

### 2.3.3. Sonderform des L-Netzes

Die Begrenzungsvorschriften 1 bis 5 sind willkürlich festgelegt. Ein etwas abgeändertes Netz mag für manche Fragestellungen unter Umständen geeigneter sein. Es ist deshalb zu fordern, daß die Begrenzungsvorschriften flexibel gehandhabt und der bearbeiteten Aufgabe angepaßt werden.

Von besonderer Bedeutung, vor allem für praktische Anwendungen, ist ein L-Netz, das folgender Begrenzungsvorschrift genügt:

### Sondervorschrift zur Begrenzung des L-Netzes

Ausschließlich die hinführenden Kausalverweise des L-Knotens können mit Netzknoten besetzt werden, die nicht direkt meßbar sind.

Ein solches L-Netz gibt die Möglichkeit für eine vereinfachte, und deshalb schnelle und problemlose Vorgehensweise. Ein vereinfachtes Vorgehen ist dann angebracht, wenn keine Kausalketten, sondern vor allem die Wahrscheinlichkeiten der unmittelbaren Ursachen des L-Knotens von Interesse sind. Sind dann die umgebenden Netzknoten dieser unmittelbaren Ursachen hauptsächlich direkt meßbare Knoten, so ist ein derart vereinfachtes L-Netz auch ohne wesentliche Einbußen an Aussagefähigkeit einzusetzen.

### 3. Berechnung des L-Netzes

### 3.1. Aufstellung des Gleichungssystems

### 3.1.1. Wertungsverbund $W(H_{u_0})$

Zur Bestimmung der Wahrscheinlichkeiten der H-Knoten werden die Elemente der jeweiligen Wertungsumgebungen verwendet. Die Elemente einer einzelnen Wertungsumgebung werden dazu in der Art ihres Vorliegens in einen sogenannten Wertungsverbund eingebracht.

Ist $H_{u_0}$ ein beliebiger H-Knoten des L-Netzes, dann werden zunächst alle Elemente von $WERT(H_{u_0})$ zu einem Verbund zusammengefügt. Aus diesem Verbund wird der Wertungsverbund $W(H_{u_0})$ dadurch gebildet, daß die sicher vorliegenden, sicher nicht vorliegenden bzw. unsicher bestimmt vorliegenden Ereignisse entsprechend gekennzeichnet und die Ereignisse mit unbekannter Wahrscheinlichkeit entfernt werden.

Im einzelnen erfolgt die Erstellung von $W(H_{u_0})$ durch folgende Maßnahmen:

a) Alle H-Knoten werden mit einer ' -Kennung versehen.

b) Direkt meßbare Knoten bleiben bei sicherem Vorliegen unverändert; sie erhalten im Fall des unsicheren Vorliegens eine ' -Kennung, im Fall des sicheren Nicht-Vorliegens eine ‾ -Kennung.

c) Direkt meßbare Knoten mit unbekannter Zutreffenswahrscheinlichkeit werden entfernt.

d) Ein beliebiger Knoten aus $DIFF(H_{u_0})$ wird dann entfernt, falls die von ihm zusammen mit $H_{u_0}$ verursachten Elemente aus $WERT(H_{u_0})$ alle eine Zutreffenswahrscheinlichkeit Null besitzen.

e) Ist ein Knoten A gemäß Ziffer c) oder d) entfernt worden, oder liegt A mit Sicherheit nicht vor, dann werden auch alle Netzknoten entfernt, die auf Schaltstellen der zu A hin- oder von A wegführenden Kausalverweise einwirken.

f) Besitzt ein direkt meßbarer Netzknoten eine vergleichsweise geringe Zutreffenswahrscheinlichkeit, so kann er als nicht vorliegend eingestuft werden.

g) Für eine bequeme Anwendung des L-Satzes auf Ausdrücke der Form $p(H_{u_0} \mid W(H_{u_0}))$ ist es zweckmäßig, den Wertungsverbund $W(H_{u_0})$ so zu sortieren, daß von links nach rechts zuerst die sicher bestimmten Ereignisse, danach die unsicher bestimmten E- und U-Knoten und schließlich die H-Knoten erscheinen.

Beispiel:

Für den H-Knoten H4 der Abb.2.3 wird W(H4) ermittelt. Es gilt:

$$\text{WERT(H4)} := \{ \underbrace{\text{U3, H2,}}_{\text{URS(H4)}} \underbrace{\text{E6, E7, E8, E9, L,}}_{\text{FOL(H4)}} \underbrace{\text{U8, U9, U10, H5,}}_{\text{DIFF(H4)}} \underbrace{\text{H1}}_{\text{INH(H4)}} \}.$$

Für die Wahrscheinlichkeiten der direkt meßbaren Knoten werden folgende Zahlenwerte angenommen:

$p(U3 \mid U3') := 0,$
$p(U8 \mid U8') := 0.1,$
$p(U9 \mid U9') := 0.01,$
$p(U10 \mid U10') := 0.9,$
$p(L \mid L') := 1,$
$p(E6 \mid E6') := 0,$
$p(E7 \mid E7') := 1,$
$p(E8 \mid E8') := 1,$
$p(E9 \mid E9') := \text{unbekannt}.$

Die Elemente aus WERT(H4) werden zunächst zu dem Verbund (U3 H2 E6 E7 E8 E9 L U8 U9 U10 H5 H1) zusammengestellt, auf den dann die Maßnahmen a) bis g) angewendet werden. Dies ergibt:

a) H2′, H5′ und H1′ erhalten die ′-Kennung.

b) Die direkt meßbaren Knoten werden zu $\overline{U3}$, $\overline{E6}$, E7, E8, L, U8′, U9′, U10′.

c) E9 wird entfernt, da $p(E9 \mid E9') := \text{unbekannt}$.

d) U9 und U10 werden entfernt, da $p(E6 \mid E6') := 0$.

e) H1′ wird entfernt, da $p(U3 \mid U3') := 0$.

f) U9′ wird zu $\overline{U9}$, da $p(U9 \mid U9') \approx 0$.

g) U8′, H2′, H5′ werden in dieser Reihenfolge am rechten Ende des Verbundes plaziert.

Damit ergibt sich für den Wertungsverbund W(H4):

$$W(H4) := ( \overline{U3} \ \overline{E6} \ E7 \ E8 \ L \ U8' \ H2' \ H5' ).$$


### 3.1.2. Wertungsgleichungen

Mit Hilfe der Wertungsverbunde, die für jeden H-Knoten eines L-Netzes zu bilden sind, werden die sogenannten Wertungsgleichungen aufgestellt.

Die Grundlage für die Erstellung dieser Wertungsgleichungen ist der in Abschnitt 1. angegebene L-Satz. Mit Hilfe des L-Satzes erreicht man ein (nicht-lineares) Gleichungssystem, dessen Lösung die Wahrscheinlichkeiten der H-Knoten des L-Netzes liefert. Dies ist gleichbedeutend mit der Berechnung des Netzes unter Berücksichtigung der gegenseitigen Wechselwirkung aller Netzknoten.

Es seien die Wertungsumgebungen WERT($H_\mu$), $\mu = 1,...,m$ des L-Netzes bekannt. Daraus ergeben sich gem. Abschnitt 3.1.1. die zugehörigen Wertungsverbunde W($H_\mu$), mit denen wiederum die m Wertungsgleichungen wie folgt formuliert werden können:

$p(H_\mu \mid H_\mu') = p(H_\mu \mid W(H_\mu)), \mu := 1,...,m.$

Auf diese Wertungsgleichungen wird jeweils der L-Satz angewendet. Dadurch erhält man ein System von m Gleichungen in den m Unbekannten $p(H_\mu \mid H_\mu')$, $\mu := 1,...,m$, das schließlich noch durch abkürzende Bezeichnungen und einfache Umformungen in eine für die Lösung zweckmäßige Form gebracht wird.

Die bei der Aufstellung der Wertungsgleichungen zu beachtenden Einzelheiten werden zweckmäßigerweise an einem Beispiel erläutert.


Beispiel:

Gegeben sei ein L-Netz der folgenden Struktur:

Es wird angenommen, daß alle direkt meßbaren Knoten mit Sicherheit vorliegen. Dann ergeben sich folgende Wertungsgleichungen:

Glg.3.1 $\quad p(H1 \mid H1') = p(H1 \mid V1\ H2'\ H3')$

mit V1 := (U1 U2 E1 E2 E3 E4 L). Glg.3.2 $\quad p(H2 \mid H2') = p(H2 \mid V2\ H1'\ H3')$

mit V2 := (U3 E3 E4 E5 E6 L). Glg.3.3 $\quad p(H3 \mid H3') = p(H3 \mid V3\ H1'\ H2')$

mit V3 := (U4 U5 U6 E6 E7 L).

Bei Anwendung des L-Satzes auf Glg.3.1 ergibt sich exemplarisch für $p(H1 \mid H1')$:

$$p(H1 \mid H1') = \cfrac{p(H1\ V1\ H2\ H3)\cdot \cfrac{p(H2 \mid H2')}{p(H2)}\cdot \cfrac{p(H3 \mid H3')}{p(H3)} \quad +}{p(V1\ H2\ H3)\cdot \cfrac{p(H2 \mid H2')}{p(H2)}\cdot \cfrac{p(H3 \mid H3')}{p(H3)} \quad +} \quad \ldots$$

$$\ldots \cfrac{p(H1\ V1\ H2\ \overline{H3})\cdot \cfrac{p(H2 \mid H2')}{p(H2)}\cdot \cfrac{p(\overline{H3} \mid H3')}{p(\overline{H3})} \quad +}{p(V1\ H2\ \overline{H3})\cdot \cfrac{p(H2 \mid H2')}{p(H2)}\cdot \cfrac{p(\overline{H3} \mid H3')}{p(\overline{H3})} \quad +} \quad \ldots$$

$$\ldots \cfrac{p(H1\ V1\ \overline{H2}\ H3)\cdot \cfrac{p(\overline{H2} \mid H2')}{p(\overline{H2})}\cdot \cfrac{p(H3 \mid H3')}{p(H3)} \quad +}{p(V1\ \overline{H2}\ H3)\cdot \cfrac{p(\overline{H2} \mid H2')}{p(\overline{H2})}\cdot \cfrac{p(H3 \mid H3')}{p(H3)} \quad +} \quad \ldots$$

$$\ldots \cfrac{p(H1\ V1\ \overline{H2}\ \overline{H3})\cdot \cfrac{p(\overline{H2} \mid H2')}{p(\overline{H2})}\cdot \cfrac{p(\overline{H3} \mid H3')}{p(\overline{H3})}}{p(V1\ \overline{H2}\ \overline{H3})\cdot \cfrac{p(\overline{H2} \mid H2')}{p(\overline{H2})}\cdot \cfrac{p(\overline{H3} \mid H3')}{p(\overline{H3})}} \quad \cdot$$

Um eine solche Gleichung auch bei einer größeren Anzahl unsicherer Ereignisse noch übersichtlich anschreiben zu können, werden folgende abkürzende Bezeichnungen eingeführt:

$p(H1 \mid H1') := x1,$

$p(H2 \mid H2') := x2,$

$p(H3 \mid H3') := x3,$

$$\frac{p(H1\ V1\ H2\ H3)}{p(H2)\cdot p(H3)} := Z0, \qquad\qquad \frac{p(V1\ H2\ H3)}{p(H2)\cdot p(H3)} := N0,$$

$$\frac{p(H1\ V1\ H2\ \overline{H3})}{p(H2)\cdot p(\overline{H3})} := Z1, \qquad\qquad \frac{p(V1\ H2\ \overline{H3})}{p(H2)\cdot p(\overline{H3})} := N1,$$

$$\frac{p(H1\ V1\ \overline{H2}\ H3)}{p(\overline{H2})\cdot p(H3)} := Z2, \qquad\qquad \frac{p(V1\ \overline{H2}\ H3)}{p(\overline{H2})\cdot p(H3)} := N2,$$

$$\frac{p(H1\ V1\ \overline{H2}\ \overline{H3})}{p(\overline{H2})\cdot p(\overline{H3})} := Z3, \qquad\qquad \frac{p(V1\ \overline{H2}\ \overline{H3})}{p(\overline{H2})\cdot p(\overline{H3})} := N3.$$

Erläuterungen zu den verwendeten Bezeichnungen:

1) Die Größen $p(H_\mu|H_\mu')$ erhalten die Bezeichnungen $x_\mu$ , $\mu := 1, ..., m$. Sie sind die Unbekannten, nach denen das zu erstellende Gleichungssystem aufzulösen ist.
Enthalten die Wertungsgleichungen auch '-gekennzeichnete E- bzw. U-Knoten, so werden diese Elemente bei der ersten Anwendung des L-Satzes nicht berücksichtigt, sondern in den Ausdrücken $Z_\gamma$ bzw. $N_\gamma$ einfach unverändert mitgeführt.

2) In den Bezeichnungen der angegebenen Quotienten stehen Z und N für Zähler bzw. Nenner (des L-Satzes). Der jeweils zu Z bzw. N gehörende Index $\gamma$ (der wegen des Druckerschriftbilds hochgestellt geschrieben ist) gibt an, welche Ereignisse des bezeichneten Quotienten negiert auftreten:
Sei hierzu $\gamma$ ein beliebiger Index mit $0 \leq \gamma \leq 2^a - 1$, wobei a die Anzahl der H-Knoten des zugrundeliegenden Wertungsverbundes ist. Die natürliche Zahl $\gamma$ wird in eine binäre Zahl transformiert; in dem zu bezeichnenden Quotienten sind dann genau die Ereignisse negiert, die im Zähler an derselben Position stehen wie die Einsen der (rechtsbündig geschriebenen) binären Zahl $\gamma$.
Beispiel:
Der Index "3" von Z3 gibt an, daß in dem Quotienten

$$Z3 := \frac{p(H1\ V1\ \overline{H2}\ \overline{H3})}{p(\overline{H2})\cdot p(\overline{H3})}$$

die Ereignisse H2 und H3 zu negieren sind, da in dem Verbund (H1 V1 H2 H3) die Ereignisse H2 und H3 an der Position stehen, an der die binäre Zahl (0 ... 0 1 1) die Einsen aufweist.

3) Ist Z0 bekannt, so können wegen Ziffer 2) bei vorgegebenem Index alle $Z_\gamma$ , $\gamma := 0, ... , 2^a - 1$ angeschrieben werden.
Z0 und N0 unterscheiden sich nur durch die Größe H1, so daß bei bekanntem Z0 auch N0, und damit in entsprechender Weise alle $N_\gamma$ , $\gamma := 0,..., 2^a - 1$ bekannt sind.
Mit den so eingeführten Bezeichnungen folgt aus Glg.3.1:

$$Glg.3.4 \qquad x1 = \frac{Z0\cdot x2\cdot x3\ +\ Z1\cdot x2\cdot\overline{x3}\ +\ Z2\cdot\overline{x2}\cdot x3\ +\ Z3\cdot\overline{x2}\cdot\overline{x3}}{N0\cdot x2\cdot x3\ +\ N1\cdot x2\cdot\overline{x3}\ +\ N2\cdot\overline{x2}\cdot x3\ +\ N3\cdot\overline{x2}\cdot\overline{x3}}.$$

EP 0 400 354 A2

Nach einer weiteren Umformung erhält man:

$$\text{Glg.3.5} \quad x1 = \frac{x2 \cdot x3 \cdot (Z0-Z2-Z1+Z3) + x3 \cdot (Z2-Z3) + x2 \cdot (Z1-Z3) + Z3}{x2 \cdot x3 \cdot (N0-N2-N1+N3) + x3 \cdot (N2-N3) + x2 \cdot (N1-N3) + N3}$$

$$\text{mit } Z0 := \frac{p(H1 \; V1 \; H2 \; H3)}{p(H2) \cdot p(H3)} \cdot$$

Die Glg.3.5 ist die erste Gleichung des aufzustellenden Gleichungssystems. Sie wird wegen der übersichtlichen Form nicht weiter umgeschrieben.

Völlig entsprechend verfährt man mit den weiteren Wertungsgleichungen 3.2 und 3.3. Man erhält:

$$\text{Glg.3.6} \quad x2 = \frac{x1 \cdot x3 \cdot (Z0-Z2-Z1+Z3) + x3 \cdot (Z2-Z3) + x1 \cdot (Z1-Z3) + Z3}{x1 \cdot x3 \cdot (N0-N2-N1+N3) + x3 \cdot (N2-N3) + x1 \cdot (N1-N3) + N3}$$

$$\text{mit } Z0 := \frac{p(H2 \; V2 \; H1 \; H3)}{p(H1) \cdot p(H3)} \cdot$$

$$\text{Glg.3.7} \quad x3 = \frac{x1 \cdot x2 \cdot (Z0-Z2-Z1+Z3) + x2 \cdot (Z2-Z3) + x1 \cdot (Z1-Z3) + Z3}{x1 \cdot x2 \cdot (N0-N2-N1+N3) + x2 \cdot (N2-N3) + x1 \cdot (N1-N3) + N3}$$

$$\text{mit } Z0 := \frac{p(H3 \; V3 \; H1 \; H2)}{p(H1) \cdot p(H2)} \cdot$$

Die Glgn.3.5, 3.6 und 3.7 bilden ein System aus drei nichtlinearen Gleichungen zur Bestimmung der drei Unbekannten x1, x2 und x3.


3.1.3. Algorithmus zur Bestimmung des Gleichungssystems

Um für ein beliebiges $H\mu_0$ bei Vorliegen der Wertungsgleichung
$p(H\mu_0 \mid H'_{\mu 0}) = p(H\mu_0 \mid W(H\mu_0))$
unmittelbar die entsprechende Gleichung in der Form der Glg.3.5 anschreiben zu können, wird ein einfacher Algorithmus hergeleitet.

Eine Gleichung in der Form der Glg.3.5, die man aus einer Wertungsgleichung dadurch erhält, daß man den L-Satz anwendet, die $\overline{x}_\mu$ durch $(1 - x_\mu)$ ersetzt und die Koeffizienten der Unbekannten zusammenfaßt, wird als Systemgleichung bezeichnet, d.h. sie ist eine Gleichung des gesuchten Gleichungssystems.

Gegeben sei eine beliebige Wertungsgleichung
Glg.3.8 $\quad p(H\mu_0 | H'_{\mu 0}) = p(H\mu_0 \mid ... H1' \; H2' \; H3' \; ... )$,
wobei der Wertungsverbund $W(H\mu_0)$ links von H1' nur sicher bestimmte Ereignisse (vorhanden oder nicht vorhanden) enthält, während rechts von H1' beliebig viele weitere H-Knoten folgen können.

(Zur Vereinfachung enthält hier der Wertungsverbund als unsichere Ereignisse nur H-Knoten; unsicher bestimmte E-bzw. U-Knoten werden unverändert in den $Z_\gamma$ und $N_\gamma$ mitgeführt.)

12

Das Bildungsgesetz für Systemgleichungen kann unmittelbar abgelesen werden, wenn man die Anzahl der H-Knoten in einem Wertungsverbund schrittweise erhöht und die jeweils zugehörigen Systemgleichungen miteinander vergleicht. Dies wird für die Glg.3.8 durchgeführt, wobei eine Anzahl von a: = 1, a: = 2 und a: = 3 H-Knoten zugelassen wird.

$\underline{a: = 1}$

Für $W(H_{\mu 0}) := ( \dots H1' )$ gilt:

$$p(H_{\mu_0} \mid H'_{\mu_0}) = \frac{p(H_{\mu_0} \dots H1) \cdot \dfrac{p(H1 \mid H1')}{p(H1)} + p(H_{\mu_0} \dots \overline{H1}) \cdot \dfrac{p(\overline{H1} \mid H1')}{p(\overline{H1})}}{p( \dots H1) \cdot \dfrac{p(H1 \mid H1')}{p(H1)} + p( \dots \overline{H1}) \cdot \dfrac{p(\overline{H1} \mid H1')}{p(\overline{H1})}}.$$

$$x_{\mu_0} = \frac{Z0 \cdot x1 + Z1 \cdot \overline{x1}}{N0 \cdot x1 + N1 \cdot \overline{x1}}$$

Glg.3.9
$$= \frac{x1 \cdot (Z0 - Z1) + Z1}{x1 \cdot (N0 - N1) + N1}$$

$$\text{mit } Z0 := \frac{p(H_{\mu_0} \dots H1)}{p(H1)}.$$

$\underline{a: = 2}$

Für $W(H_{\mu 0}) := ( \dots H1' \, H2' )$ gilt (vergl. Glg.3.5):

Glg.3.10
$$x_{\mu_0} = \frac{x1 \cdot x2 \cdot (Z0 - Z2 - Z1 + Z3) + x2 \cdot (Z2 - Z3) + x1 \cdot (Z1 - Z3) + Z3}{x1 \cdot x2 \cdot (N0 - N2 - N1 + N3) + x2 \cdot (N2 - N3) + x1 \cdot (N1 - N3) + N3}$$

$$\text{mit } Z0 := \frac{p(H_{\mu_0} \dots H1 \, H2)}{p(H1) \cdot p(H2)}.$$

$\underline{a: = 3}$

Für $W(H_{\mu 0}) := ( \dots H1' \, H2' \, H3' )$ folgt nach elementarer Rechnung:

13

$$\text{Glg.3.11} \quad x_{\mu_0} = \frac{x1 \cdot x2 \cdot x3 \cdot (Z0-Z4-Z2+Z6-Z1+Z5+Z3-Z7) \quad +}{x1 \cdot x2 \cdot x3 \cdot (N0-N4-N2+N6-N1+N5+N3-N7) \quad +} \ldots$$

$$\ldots \frac{x2 \cdot x3 \cdot (Z4-Z6-Z5+Z7) \quad + \quad x1 \cdot x3 \cdot (Z2-Z6-Z3+Z7) \quad +}{x2 \cdot x3 \cdot (N4-N6-N5+N7) \quad + \quad x1 \cdot x3 \cdot (N2-N6-N3+N7) \quad +} \ldots$$

$$\ldots \frac{x3 \cdot (Z6-Z7) \quad + \quad x1 \cdot x2 \cdot (Z1-Z5-Z3+Z7) \quad +}{x3 \cdot (N6-N7) \quad + \quad x1 \cdot x2 \cdot (N1-N5-N3+N7) \quad +} \ldots$$

$$\ldots \frac{x2 \cdot (Z5-Z7) \quad + \quad x1 \cdot (Z3-Z7) \quad + \quad Z7}{x2 \cdot (N5-N7) \quad + \quad x1 \cdot (N3-N7) \quad + \quad N7} ,$$

$$\text{mit } Z0 := \frac{p(H_{\mu_0} \ldots H1 \ H2 \ H3)}{p(H1) \cdot p(H2) \cdot p(H3)} .$$

Zähler und Nenner der Glgn.3.9, 3.10 und 3.11 sind jeweils gleich strukturiert, so daß es ausreicht, die Aufbauprinzipien des Zählers zu untersuchen.

Sei also der Zähler einer Systemgleichung für (a - 1) unsichere Ereignisse gegeben. Gesucht ist eine Verfahrensvorschrift, die den Zähler der Systemgleichung für a unsichere Ereignisse bei sonst unverändertem Wertungsverbund liefert. Eine solche Verfahrensvorschrift ergibt sich aus dem Aufbau der Glgn.3.9 bis 3.11 wie folgt:

### Algorithmus zur Bestimmung des Zählers einer Systemgleichung bei Zulassung eines weiteren H-Knotens

Gegeben ist der Zähler einer Systemgleichung für (a - 1) H-Knoten. An den zugrunde liegenden Wertungsverbund wird von rechts der a-te H-Knoten $H_a$ angefügt. Der Zähler der neuen Systemgleichung ergibt sich durch folgende Schritte:

Schritt 1: Multipliziere alle Summanden des vorgegebenen Zählers mit $x_a$ .

Schritt 2: Schreibe jeden einzelnen, mit (-1) multiplizierten Summanden erneut hin.

Schritt 3: An die binär geschriebenen Indizes der $Z_\gamma$ der ursprünglichen Summanden wird von rechts eine binäre 0 angefügt.

Schritt 4: An die binär geschriebenen Indizes der $Z_\gamma$ der mit Schritt 2 hinzugekommenen Summanden wird von rechts eine binäre 1 angefügt.

Schritt 5: Fasse die Summanden zusammen.

Schritt 6: Zu dem so gebildeten Zähler wird der anfänglich vorhandene Zähler addiert.

Schritt 7: An die binär geschriebenen Indizes der mit Schritt 6 hinzugekommenen $Z_\gamma$ wird von rechts eine binäre 1 angefügt.

### Beispiel:

Für a := 1 verwendet man den Zähler der Glg.3.9 in der angegebenen Gestalt, also Zähler := x1*(Z0-Z1) + Z1.

Für a := 2 wird dieser Zähler mit Hilfe der Schritte 1 bis 7 wie folgt umgewandelt:

Schritt 1: x1*x2*(Z0-Z1) + x2*Z1.

Schritt 2: x1*x2*(Z0-Z1) + x2*Z1 - x1*x2*(Z0-Z1) - x2*Z1.

Schritt 3: x1*x2*(Z0-Z2) + x2*Z2 - x1*x2*(Z0-Z1) - x2*Z1.

Schritt 4: x1•x2•(Z0-Z2) + x2•Z2 - x1•x2•(Z1-Z3) - x2•Z3.

Schritt 5: x1•x2•(Z0-Z2-Z1+Z3) + x2•(Z2-Z3).

Schritt 6: x1•x2•(Z0-Z2-Z1+Z3) + x2•(Z2-Z3) + x1•(Z0-Z1) + Z1.

Schritt 7: x1•x2•(Z0-Z2-Z1+Z3) + x2•(Z2-Z3) + x1•(Z1-Z3) + Z3.

Nach der Durchführung von Schritt 7 erhält man erwartungsgemäß den Zähler der Glg.3.10.

### 3.2. Lösung des Gleichungssytems

Ein für beliebig viele Unbekannte angelegtes nichtlineares Gleichungssystem in der Form der Glgn.3.9 bis 3.11 kann auf einfache Weise mit Hilfe des nichtlinearen Einzel- oder des nichtlinearen Gesamtschrittverfahrens iterativ gelöst werden. Hierzu bezeichnen

$F_\mu$ , $\mu := 1,...,m$

die m Gleichungen des nichtlinearen Gleichungssystems,

$x := (x_1, x_2, ..., x_m)$

den Lösungsvektor des nichtlinearen Gleichungssystems,

$x^{(k)} := (x_1^{(k)},...,x_m^{(k)})$, $k := 0,1,2,...$

die k-te Näherung des Lösungsvektors.

Beim nichtlinearen Einzelschrittverfahren werden für $\mu := 1, ..., m$ die $\mu$-ten Gleichungen

$$\text{Glg.3.12} \quad F_\mu(x_1^{(k+1)}, ..., x_{\mu-1}^{(k+1)}, x_\mu^{(k)}, x_{\mu+1}^{(k)}, ..., x_m^{(k)}) = 0,$$

und beim nichtlinearen Gesamtschrittverfahren werden die $\mu$-ten Gleichungen

$$\text{Glg.3.13} \quad F_\mu(x_1^{(k)}, ..., x_{\mu-1}^{(k)}, x_\mu^{(k)}, x_{\mu+1}^{(k)}, ..., x_m^{(k)}) = 0$$

nach $x_\mu$ aufgelöst.

Anschließend wird gesetzt:

$x_\mu^{(k+1)} := x_\mu$ , $\mu := 1,...,m$.

Man erhält also die (k + 1)-te Näherung des Lösungsvektors nach sukzessiver Auflösung der m nichtlinearen skalaren Gleichungen.

Als Voraussetzung muß hierbei gefordert werden, daß die Glgn.3.12 bzw. 3.13 nach $x_\mu$ auflösbar sind, und daß $0 \leq x_\mu^{(k)} \leq 1$ gilt, für alle $\mu$ und k.

Man startet die Iteration mit dem Startvektor

$x^{(0)} = (x_1^{(0)}, ..., x_m^{(0)})$

$:= (0.5 , ... , 0.5 )$.

Erreicht man mit diesem Startvektor keine Konvergenz für die eingesetzten Verfahren, so verbessert man den Startvektor wie folgt:

Es wird die Wertungsgleichung bestimmt, die im (ausreichend großen) Wertungsverbund möglichst wenig '-gekennzeichnete H-Knoten enthält, für deren Zutreffenswahrscheinlichkeit noch kein Zahlenwert verfügbar ist. Ein solcher H-Knoten $H_j$ mit auch näherungsweise noch nicht bekannter Wahrscheinlichkeit wird aus dem Wertungsverbund des zu berechnende Hnotens $H_{\mu 0}$ wie folgt entfernt:

a) $H_j$ aus URS($H_{\mu 0}$).

Entferne $H_j$ und alle Netzknoten, die von $H_j$ wegführende Kausalverweise inhibitorisch beeinflussen.

b) $H_j$ aus FOL($H_{\mu 0}$).

Entferne $H_j$ und alle Netzknoten, die auf $H_j$ hinführende Kausalverweise inhibitorisch beeinflussen. Entferne alle Netzknoten, deren Legitimation für das Vorkommen im Wertungsverbund darin besteht, daß sie Elemente aus URS($H_j$) sind.

c) $H_j$ aus DIFF($H_{\mu 0}$).

Entferne $H_j$ und alle Netzknoten, die von $H_j$ wegführende Kausalverweise inhibitorisch beeinflussen.

d) $H_j$ ist ein inhibitorisch wirkender Netzknoten.

Entferne $H_j$.
(Nur in seltenen Ausnahmen sind H-Knoten auch als inhibitorisch wirkende Netzknoten zuzulassen.)
Mit dem so reduzierten Wertungsverbund läßt sich unter Verwendung der Glgn.4.3 und 4.6 ein erster Zahlenwert für p($H_{\mu 0}$ | $H'_{\mu 0}$) leicht ermitteln. Dieser Zahlenwert steht dann bei der Bearbeitung der nächsten Wertungsgleichung bereits zur Verfügung.
Das Vorgehen wird so lange fortgesetzt, bis für alle $x_\mu$, $\mu := 1, \ldots, m$ ein Näherungswert ermittelt ist. Diese $x_\mu$ bilden den verbesserten Startvektor. Konvergieren die eingesetzten Iterationsverfahren nicht, so verbleibt der Startvektor als Näherungslösung des Gleichungsystems.

## 4. Datengewinnung aus statistischen Erhebungen

### 4.1. Festlegung der benötigten Größen

Zur Berechnung der Zutreffenswahrscheinlichkeiten aller unbekannten, nicht direkt meßbaren Zustände des L-Netzes, werden für alle H-Knoten die Wertungsgleichungen p($H_\mu$ | $H'_\mu$) = p($H_\mu$ | W($H_\mu$)), $\mu := 1, \ldots, m$ gebildet, die mit Hilfe des L-Satzes umgeformt werden. Hierbei ergeben sich gem. Abschnitt 3.1.2. die $Z_\gamma$ und $N_\gamma$ genannten Ausdrücke, deren Zahlenwerte nunmehr bestimmt werden müssen.
Das konkrete Vorgehen zur Festlegung der im einzelnen benötigten Wahrscheinlichkeitswerte wird zweckmäßigerweise an einem Beispiel gezeigt. Gegeben sei ein L-Netz der folgenden Struktur:

Abb.4.1:

Beispiel eines L-Netzes.

Es wird angenommen, daß die Knoten U6, U7, U8 und U9 mit Sicherheit nicht, die übrigen direkt meßbaren Netzknoten dagegen alle mit Sicherheit vorliegen. Dann gilt für p(H4 | H4'):
p(H4 | H4') = p(H4 | U2 U3 U4 U5 L E5 E6 U14 U15 $\overline{U6\ U7\ U8\ U9}$ U10 U11 U12 U13 H2' H3').
Gem. Abschnitt 3.1. folgt:

$$\text{Glg.4.1} \qquad x4 = \frac{x2 \cdot x3 \cdot (Z0-Z2-Z1+Z3) + x3 \cdot (Z2-Z3) + x2 \cdot (Z1-Z3) + Z3}{x2 \cdot x3 \cdot (N0-N2-N1+N3) + x3 \cdot (N2-N3) + x2 \cdot (N1-N3) + N3},$$

$$\text{mit } Z0 := \frac{1}{p(H2) \cdot p(H3)} \cdot p(V1) \quad , \text{ wobei}$$

$$p(V1) := p(H4 \ U2 \ U3 \ U4 \ U5 \ L \ E5 \ E6 \ U14 \ ...$$

$$... \ U15 \ \overline{U6} \ \overline{U7} \ \overline{U8} \ \overline{U9} \ U10 \ U11 \ U12 \ U13 \ H2 \ H3).$$

Da p(V1) viele Ereignisse enthält, wird der Zahlenwert von p(V1) klein. Man benötigt deshalb eine große Anzahl Stichprobenausführungen, um den Fehler eines solchen Zahlenwerts innerhalb eines festgelegten Intervalls zu halten. Diese Unannehmlichkeit läßt sich beheben, wenn es gelingt, p(V1) in ein Produkt von Verbundwahrscheinlichkeiten kleineren Umfangs zu zerlegen.

Hierfür werden zwei Unabhängigkeitsannahmen, sowie zwei sogenannte "Daumenregeln" erforderlich.

Unabhängigkeitsvoraussetzungen

1.

Ein beliebiger Verbund mit Elementen aus $URS(H_{u0})$ ist gegenüber jedem Verbund mit Elementen aus $DIFF(H_{u0})$ stochastisch unabhängig.

2.

Die Elemente der Menge $DIFF(H_{u0}) \cup \{H_{u0}\}$ sind stochastisch unabhängig.

Es lassen sich zwei für praktische Zwecke bedeutsame Regeln festlegen. (Für einen beliebigen Knoten Z bezeichnet dabei INH(Z) die Menge derjenigen Netzknoten, die auf Z auftreffende Kausalverweise inhibitorisch beeinflussen.)

Regel 1

Unter der Bedingung $H_{u0}$ sind die Elemente der Menge $URS(H_{u0}) \cup INH(H_{u0})$ gegenüber den übrigen Elementen aus $WERT(H_{u0})$ angenähert stochastisch unabhängig.

Regel 2

X ist ein beliebiges Element aus $FOL(H_{u0})$.
Unter der Bedingung eines Verbundes, der aus allen Elementen von $URS(X) \cup INH(X)$ besteht, ist X gegenüber den übrigen Elementen von $WERT(H_{u0})$ angenähert stochastisch unabhängig.

Mit diesen Regeln und den getroffenen Unabhängigkeitsannahmen wird p(V1) wie folgt zerlegt:

p(V1) = p(U2 U3 U4 U5 | H4) $\cdot$ p(V2) , mit

p(V2) := p(L E5 E6 U14 U15 H2 H3 $\overline{U6}$ $\overline{U7}$ $\overline{U8}$ $\overline{U9}$ U10... ...U11 U12 U13 | H4) $\cdot$ p(H4).

p(V2) = p(L | H2 H3 $\overline{U6}$ $\overline{U7}$ H4) $\cdot$ p(V3) , mit

p(V3) := p(E5 E6 U14 U15 $\overline{U8}$ $\overline{U9}$ U10 U11 U12 U13 | H2 H3... ... $\overline{U6}$ $\overline{U7}$ H4) $\cdot$ p(H2 H3 $\overline{U6}$ $\overline{U7}$ H4).

p(V3) = p(E5 | $\overline{U8}$ $\overline{U9}$ H4) $\cdot$ p(V4) , mit

p(V4):= p(E6 U14 U15 H2 H3 $\overline{U6}$ $\overline{U7}$ U10 U11 U12 U13 | $\overline{U8}$... ... $\overline{U9}$ H4) $\cdot$ p( $\overline{U8}$ $\overline{U9}$ H4).

p(V4) = p(E6 | H4 U10) $\cdot$ p(V5), mit

p(V5):= p(U14 U15 H2 H3 $\overline{U6}\ \overline{U7}\ \overline{U8}\ \overline{U9}$ U11 U12 U13 | H4 U10) • p(H4 U10).

p(V5) = p(U14 | $\overline{U6}\ \overline{U7}$ H4 U11 U12) • p(V6) , mit

p(V6):= p(U15 H2 H3 $\overline{U8}\ \overline{U9}$ U10 U13 | $\overline{U6}\ \overline{U7}$ H4 U11 U12) • p( $\overline{U6}\ \overline{U7}$ H4 U11 U12).

p(V6) = p(U15 | $\overline{U6}$ H4 U11 U12 U13) • p(V7) , mit

p(V7):= p(H2 H3 $\overline{U7}\ \overline{U8}\ \overline{U9}$ U10 | $\overline{U6}$ H4 U11 U12 U13) • p( $\overline{U6}$ H4 U11 U12 U13).

p(V7) = p(H4)•p(H2)•p(H3)•p( $\overline{U6}\ \overline{U7}\ \overline{U8}\ \overline{U9}$ U10 U11 U12 U13)

Insgesamt ergibt sich für Z0:

$$
Z0 := \frac{1}{p(H2)\ p(H3)}
$$

$$
\cdot \Big[ p(U2\ U3\ U4\ U5 | H4) \cdot p(L | H2\ H3\ \overline{U6}\ \overline{U7}\ H4)
$$

$$
\cdot p(E5 | \overline{U8}\ \overline{U9}\ H4) \cdot p(E6 | H4\ U10)
$$

$$
\cdot p(U14 | \overline{U6}\ \overline{U7}\ H4\ U11\ U12) \cdot p(U15 | \overline{U6}\ H4\ U11\ U12\ U13)
$$

$$
\cdot p(H4)\ p(H2)\ p(H3) \cdot p(\overline{U6}\ \overline{U7}\ \overline{U8}\ \overline{U9}\ U10\ U11\ U12\ U13) \Big].
$$

Umformungen:

a) p(H2) und p(H3) werden gekürzt.

b) Der Faktor p( $\overline{U6}\ \overline{U7}\ \overline{U8}\ \overline{U9}$ U10 U11 U12 U13) erscheint auch im Nenner von Glg.4.1 und kann deshalb gekürzt werden. (Vergl. Glgn.4.6 und 4.7).

c) p(U2 U3 U4 U5 | H4) wird mit p(H4) multipliziert. Dann wird gesetzt:

p(U2 U3 U4 U5 H4) = p(H4 | U2 U3 U4 U5)•p(U2 U3 U4 U5). Der Faktor p(U2 U3 U4 U5) erscheint auch im Nenner von Glg.4.1 und kann deshalb ebenfalls gekürzt werden.

Es folgt:

Glg.4.2     Z0 := p(H4 | U2 U3 U4 U5) • p(L | H2 H3 $\overline{U6}\ \overline{U7}$ H4) • p(E5 | $\overline{U8}\ \overline{U9}$ H4) • p(E6 | H4 U10) • p(U14 | $\overline{U6}\ \overline{U7}$ H4 U11 U12)•p(U15 | $\overline{U6}$ H4 U11 U12 U13).

Ist also $H_{\mu_0}$ der zu berechnende Netzknoten, und wird durch eine Klammer

ein Verbund gekennzeichnet, der alle negierten oder unnegierten Elemente der darüber stehenden Menge enthält, so gilt für Glg.4.2:

$$
\text{Glg.4.3} \quad Z0 := p(H_{\mu_0} | \underline{URS(H_{\mu_0})}) \cdot \prod_{X \in FOL(H_{\mu_0})} p(X | \underline{URS(X)}).
$$

Sind die Mengen $INH(H_{\mu_0})$ und INH(X) nicht leer, so folgt mit den Regeln 1 und 2:

$$
\text{Glg.4.3'} \quad Z0 := p(H_{\mu_0} | \underline{URS(H_{\mu_0}) \cup INH(H_{\mu_0})}) \cdot \prod , \quad \text{mit}
$$

$$
\prod := \prod_{X \in FOL(H_{\mu_0})} p(X | \underline{URS(X) \cup INH(X)}).
$$

Für die $N_\gamma$ im Nenner von Glg.4.1 gilt:

$N_\gamma = Z_\gamma + \tilde{Z}_\gamma$ ,

wobei in $\tilde{Z}_\gamma$ im Unterschied zu $Z_\gamma$ alle H4 negiert sind.

Damit ergibt sich unmittelbar:

N0 = Z0 + p( $\overline{H4}$ | U2 U3 U4 U5) · p(L | H2 H3 $\overline{U6\ U7\ H4}$ ) ·p(E5 | $\overline{U8\ U9\ H4}$ ) · p(E6 | $\overline{H4}$ U10) ·p(U14 | $\overline{U6\ U7\ H4}$ U11 U12) ·p(U15 | $\overline{U6\ H4}$ U11 U12 U13).

## 4.2. Struktur der Stichproben

Die in Glg.4.2 erscheinenden Größen besitzen alle denselben Aufbau: die rechts vom Bedingungsstrich stehenden Ereignisse sind die Ursachen des Ereignisses, das links vom Bedingungsstrich steht. Folgende Fälle können hierbei auftreten:

### Fall 1

Der Bedingungsverbund enthält alle der im L-Netz ausgewiesenen Ursachen des links vom Bedingungsstrich stehenden Ereignisses.

### Fall 2

Alle Elemente des Bedingungsverbundes sind negiert.

### Fall 3

Nicht alle Elemente des Bedingungsverbundes sind negiert.

Der Fall 1 wird durch folgende Forderung ausgeschlossen:

### Forderung 1

Ist $H_{\mu 0}$ der zu berechnende H-Knoten, so sind für alle in DIFF($H_{\mu 0}$) und URS($H_{\mu 0}$) enthaltenen U-Knoten die Wahrscheinlichkeiten ihres Vorliegens aufzuklären.

Mit der Erfüllung der Forderung 1 gilt im Fall 2 für eine beliebige, aus Glg.4.2 entnommene Wahrscheinlichkeit der Form p(A | $\overline{B1}$ ... $\overline{B}_m$), wobei URS(A) aus den Elementen B1,..., $B_m$ bestehen soll: p-(A | $\overline{B1}$ ... $\overline{B}_m$) = 0.

Trifft der Fall 3 zu, so wird die vorliegende bedingte Wahrscheinlichkeit als Quotient geschrieben und das nichtnegierte Element im Zähler und Nenner dieses Quotienten als neue Bedingung verwendet.

Beispiel (aus Glg.4.2):

$$p(U14 \mid \overline{U6}\ \overline{U7}\ H4\ U11\ U12) = \frac{p(U14\ \overline{U6}\ \overline{U7}\ H4\ U11\ U12)}{p(\overline{U6}\ \overline{U7}\ H4\ U11\ U12)}$$

$$= \frac{p(U14\ \overline{U6}\ \overline{U7}\ H4\ U12 \mid U11)}{p(\overline{U6}\ \overline{U7}\ H4\ U12 \mid U11)} \cdot$$

Als neue Bedingung wird nach Möglichkeit ein von H4 verschiedener Knoten verwendet, damit diese Umformung in gleicher Weise auch im Nenner der Glg.4.1 für den Ausdruck p(U14 | $\overline{U6\ U7\ H4}$ U11 U12) durchgeführt werden kann. Dadurch erreicht man, daß die Zahlenwerte einander entsprechender Ausdrücke aus derselben Stichprobe gewonnen werden können, so daß die Fehler der Ausdrücke im Zähler und Nenner der Glg.4.1 nach Art und Vorzeichen gleich sind.

Damit ist klar, welche Stichproben zur Ermittlung der mit Abschnitt 4.1. erfaßten Größen benötigt werden. Der Aufbau dieser Stichproben ist wie folgt (der zu berechnende H-Knoten ist mit $H_{\mu 0}$ bezeichnet):

1.

Y sei ein beliebiges Element aus $URS(H_{\mu 0})$.

Zutreffende Teilstruktur des L-Netzes:

Unter der Bedingung des Vorliegens von Y wird eine Stichprobe erhoben, wobei jede Stichprobenausführung die Angabe der Zutreffenswahrscheinlichkeiten für alle Elemente aus $URS(H_{\mu 0}) \cup INH(H_{\mu 0}) \cup \{H_{\mu 0}\}$ enthält.

Solche Stichproben werden für alle Elemente aus $URS(H_{\mu 0})$ erhoben.

2.

X sei ein beliebiges Element aus $FOL(H_{\mu 0})$, Y sei ein beliebiges aus $URS(X)$.

Zutreffende Teilstruktur des L-Netzes:

Unter der Bedingung des Vorliegens von Y wird eine Stichprobe erhoben, wobei jede Stichprobenausführung die Angabe der Zutreffenswahrscheinlichkeiten für alle Elemente aus $URS(X) \cup INH(X) \cup \{X\}$ enthält.

Solche Stichproben werden für alle Elemente aus $URS(X)$ erhoben.

Ist Z ein beliebiges weiteres Element aus $FOL(H_{\mu 0})$, so sind auch für alle Elemente aus $URS(Z)$ entsprechende Stichproben zu erstellen.

Beispiel:

Für den in Abb.4.1 enthaltenen Knoten H4 sind folgende Stichproben erforderlich:

| Bedingung | Zu untersuchende Ereignismengen |
|---|---|
| U2 | URS(H4) ∪ INH(H4) ∪ {H4} |
| U3 | |
| U4 | |
| H2 | URS(L) ∪ {L} |
| H3 | |
| U6 | URS(L) ∪ {L}, URS(U14) ∪ {U14}, URS(U15) ∪ {U15} |
| U7 | URS(L) ∪ {L}, URS(U14) ∪ {U14}, |
| U8 | URS(E5) ∪ {E5} |
| U9 | |
| H4 | URS(L) ∪ {L}, URS(E5)∪{E5}, URS(E6)∪{E6} URS(U14)∪{U14}, URS(U15)∪ {U15} |
| U10 | URS(E6)∪{E6} |
| U11 | URS(U14)∪{U14}, |
| U12 | URS(U15)∪{U15} |
| U13 | URS(U15) ∪ {U15} |
| Abb.4.2: | |
| Liste der Stichproben zur Berechnung von H4 aus Abb.4.1. | |

## 5. Wahrscheinlichkeit der Entstehung eines Folgezustands aus einer vorhandenen Ursache

### 5.1 Vorbemerkungen

Die Berechnung des L-Netzes ergibt für jeden H-Knoten die Wahrscheinlichkeit seines Zutreffens, wobei alle Ereignisse berücksichtigt sind, die auf diese Wahrscheinlichkeit einen Einfluß ausüben. Gesucht sind nun zudem Aussagen darüber, mit welcher Wahrscheinlichkeit ein vorliegender Netzknoten einen Folgeknoten erzeugt. Nur mit beiden Wahrscheinlichkeitswerten, nämlich mit
- der Wahrscheinlichkeitsangabe über das Vorliegen eines Netzknotens und
- der Wahrscheinlichkeit, mit der ein vorliegender Knoten einen Folgeknoten erzeugt,
ist man in der Lage, aus einer Ursachenmenge dasjenige Element zu bestimmen, das mit der höchsten Wahrscheinlichkeit für das Vorhandensein eines Folgezustands verantwortlich ist.

Die Wahrscheinlichkeit der Erzeugung eines Folgeknotens wird beispielhaft für den Leitsymptomknoten L und die zugehörige Ursachenmenge URS(L) untersucht, ohne daß dadurch die Allgemeingültigkeit eingeschränkt wird. Besitzt der Knoten L genau die Ursachen $A1, \dots, A_k$, d.h. liegt der Netzausschnitt vor, so ist $p(L \mid A1 \; \overline{A2} \dots \overline{A}_k)$ gemäß der Definition bedingter Wahrscheinlichkeiten zunächst die Wahrscheinlichkeit für das Auftreten von L unter der Bedingung $(A1 \; \overline{A2} \dots \overline{A}_k)$. Da außer A1 keine weitere Ursache von L existiert, ist p(L | A1 $\overline{A2}$ ... $\overline{A}_k$) zugleich auch die Wahrscheinlichkeit dafür, daß unter der Bedingung der Gültigkeit von (A1 $\overline{A2}$ ... $\overline{A}_k$ das Ereignis "A1 erzeugt L" vorliegt.

Hierbei ist das Ereignis "A1 erzeugt L" zu verstehen als: "der Systemzustand A1 zieht den Systemzustand L nach sich" oder "der Systemzustand L entwickelt sich aus dem Systemzustand A1". Man betrachtet also die Ursache A1, die Folge L und den kausalen Erzeugungsvorgang "A1 erzeugt L" als gleichzeitig vorliegende Ereignisse.

Ebenso ist für die angegebene Kausalstruktur die Größe p(L | A1 A2 $\overline{A3}$ ... $\overline{A}_k$) die bedingte Wahrscheinlichkeit für das Ereignis "A1 erzeugt L oder A2 erzeugt L". Liegt nun gemäß obigem Beispiel (A1 A2 $\overline{A3}$ ... $\overline{A}_k$) vor, sind also A1 und A2 die einzigen vorhandenen Ursachen von L, so kann der kausale Vorgang (A1 erzeugt L) durch A1 und der kausale Vorgang (A2 erzeugt L) durch A2 fördernd beeinflußt werden. In diesem Fall ist mit keinem Mittel zu entscheiden, welcher Anteil an der Erzeugung von L der Ursache A1 und welcher Anteil der Ursache A2 zukommt.

Eine Wahrscheinlichkeit p(A1 erzeugt L | A1 A2 $\overline{A3}$ ... $\overline{A}_k$) wird in einem solchen Fall keinen Zahlenwert erhalten können; als Ausweg bleibt, A1 und A2 als eine zusammengehörende Ursache zu betrachten und zu versuchen, einen Zahlenwert für p( (A1 A2) erzeugt L | A1 A2 $\overline{A3}$ ... $\overline{A}_k$) zu ermitteln. Dies gelingt, wenn sichergestellt werden kann, daß kein weiteres Element aus URS(L) an der Erzeugung von L aus (A1 A2) beteiligt ist, und daß umgekehrt (A1 A2) keinen fördernden Einfluß ausübt auf die Erzeugung von L aus einer anderen Ursache.

Formale Definition:

Es sei für ein beliebiges Ereignis A A.L Abkürzende Bezeichnung des Ereignisses "A erzeugt L".

n(A.L) Anzahl der Versuchsausführungen, bei denen das Ereignis "A erzeugt L" zutrifft.

n Gesamtzahl der Versuchsausführungen.

h Relative Häufigkeit.

Damit erhält man völlig analog zur Definition der relativen Häufigkeit herkömmlicher Ereignisse:

$$\text{Glg.5.1} \qquad h(A.L) \quad := \quad \frac{n(A.L)}{n} \quad .$$

Nach Bernoulli ist dann p(A.L) die Wahrscheinlichkeit des Ereignisses A.L, falls für $\epsilon > 0$ und n ---> $\infty$ gilt:

$$P\left( \left| \frac{n(A.L)}{n} - p(A.L) \right| < \epsilon \right) ---> 1 \quad .$$

Für eine einzelne Ursache A wird zudem definiert:

Glg.5.2 $\quad p(\overline{A}.L) := 0.$

Glg.5.3 $\quad p(\overline{A}(A.L)) := 0.$

Aus Glg.5.3 ergeben sich unmittelbar die nachfolgenden Glgn.5.4 und 5.5.

Glg.5.4 $\quad p(\overline{A}) = p(\overline{A}(\overline{A.L})).$

Glg.5.5 $\quad p(A.L) = p(A(A.L)).$

Als Ursache für L sind außer einzelnen Netzknoten auch Verbunde von Netzknoten zugelassen.

Ist also $A := (A1\ A2\ ...\ A_k)$ ein Verbund mit beliebig vielen unnegierten Elementen aus URS(L), so wird entsprechend zu Glg.5.1 definiert:

$$\text{Glg.5.1}' \qquad h(A.L) \quad = \quad \frac{n(A1.L \quad v \ ... \ v \quad A_k.L)}{n} \quad .$$

Mit der Wahrscheinlichkeitsdefinition von Bernoulli folgt:

p(A.L) = p(A1.L v ... v $A_k$.L).

Entsprechend zu den Glgn.5.2 und 5.3 gilt:

Glg.5.2$'$  $p(( \overline{A1} ... \overline{A}_k).L) = 0.$

Glg.5.3$'$  $p( \overline{A1} ... \overline{A}_k ((A1 ... A ).L)) = 0.$

Aus Glg.5.3$'$ ergibt sich sofort:

Glg.5.4$'$  $p( \overline{A1} ... \overline{A}_k) = p( \overline{A1} ... \overline{A}_k (( \overline{A1 ... A_k).L} )).$

Für Verbunde mit einer Elementanzahl > 1 besteht jedoch keine der Glg.5.5 entsprechende Gleichung, d.h. für einen Verbund A := (A1 ... A$_k$) ist im allgemeinen die Beziehung p(A.L) = p(A (A.L) nicht erfüllt. Stattdessen gilt die nachfolgende Glg.5.5$'$:

Glg.5.5$'$  $p((A1 ... A_k).L) = p(A1 (A1.L) v ... v A_k(A_k.L)).$

Die Gültigkeit der Glg.5.5$'$ wird am Beispiel A := (A1 A2) demonstriert. Es ist:

$p(A.L) = p((A1 A2 v A1 \overline{A2} v \overline{A1} A2 v \overline{A1 A2} ) (A1.L v A2.L))$

$= p((A1 A2 v A1 \overline{A2} ) (A1.L) v (A1 A2 v \overline{A1} A2) (A2.L))$

$= p(A1 (A1.L) v A2 (A2.L).$

Somit sind, da die Definitionen der Glgn.5.1 bis 5.3 nicht im Widerspruch stehen zu den übrigen Gesetzen der diskreten Stochastik, die Ereignisse A1.L, ... , A$_k$.L zu behandeln wie herkömmliche Ereignisse.

Das Vorliegen oder Nicht-Vorliegen von Erzeugungsvorgängen kann, auch wenn die Ursachen eines Folgezustands nicht miteinander in Wechselwirkung treten, im allgemeinen infolge der Komplexität des Geschehens nicht durch unmittelbares Messen oder Beobachten festgestellt werden. Als Aufgabe ergibt sich deshalb, die Wahrscheinlichkeiten kausaler Erzeugungsvorgänge aus den Informationen abzuleiten, die mit dem Kausalnetz und den Wahrscheinlichkeitswerten der darin enthaltenen Netzknoten zur Verfügung stehen.

## 5.2. Voraussetzungen

Das Kausalmodell wird mit Hilfe der nachfolgenden Strukturvoraussetzungen festgelegt. Hierzu sei A ein beliebig gewähltes Element aus der L verursachenden Knotenmenge URS(L), S sei ein beliebiger, von A und L verschiedener Knoten des L-Netzes.

### Definition (Inhibitorisch wirkender Knoten)

Ein Systemzustand S, der die strukturelle Möglichkeit besitzt, unmittelbar die Entstehung eines Ereignisses L aus einem beliebigen, L verursachenden Knoten A zu beeinträchtigen, wird als ein inhibitorisch auf A.L wirkender Systemzustand bezeichnet. Hierbei bedeutet "unmittelbar", daß sich zwischen S und dem Beeinträchtigungsmechanismus kein weiterer, bekannter Systemzustand befindet.

### Strukturvoraussetzung 1 (Beeinträchtigung von A.L)

a)

Unter der Bedingung des Vorliegens von A erfolgt der kausale Vorgang A.L mit der Wahrscheinlichkeit Eins, falls es keinen (im allgemeinen unbekannten) Systemzustand gibt, der A.L inhibitorisch beeinflußt.

b)

Ein Knoten des L-Netzes, der die Beeinträchtigung des kausalen Vorgangs A.L durch eine unmittelbare, d.h. nicht über Zwischenknoten erfolgende fördernde Einwirkung auf den Beeinträchtigungsmechanismus weiter erhöht, ist ein inhibitorisch auf A.L wirkender Netzknoten.

Erläuterung:

Ist in der nachfolgend links stehenden Struktur der Knoten S ein Element, das die Hemmung des kausalen Vorgangs A.L begünstigt (dies ist durch ein Plus an der Spitze des von S ausgehenden Pfeils angedeutet), so ist dies gleichbedeutend zu der rechts stehenden Struktur:

A T S          A T S

gleichbedeutend zu

L          L

c)

S aus INH(A.L)          S aus INH(A.L)

=====>          =====>

$p(A.L | A\ S) \leq p(A.L | A)$.          $p(A.L | A\ \overline{S}) \geq p(A.L | A)$.

d)

$p(A.L | A\ S) < p(A.L | A)$

=====>

S aus INH(A.L), oder

S erhöht die Wahrsch. von Elementen aus INH(A.L).

$p(A.L | A\ \overline{S}) < p(A.L | A)$

=====>

$\overline{S}$ vermindert die Wahrsch. von Elementen aus URS(L), oder

S ist ein Folgeknoten von L.

Strukturvoraussetzung 2 (Begünstigung von A.L)

a)

Ein Knoten des L-Netzes, der die Beeinträchtigung des kausalen Vorgangs A.L durch eine unmittelbare, d.h. nicht über Zwischenknoten erfolgende hemmende Einwirkung auf den Beeinträchtigungsmechanismus vermindert, ist ein begünstigend auf A.L wirkender Netzknoten.

b)

Ein begünstigend auf A.L einwirkender Netzknoten ist eine Ursache von L.

Erläuterung:

Ist in der nachfolgend links stehenden Struktur der Knoten S ein Element, das die Hemmung des kausalen Vorgangs A.L beeinträchtigt (dies ist durch ein Minus an der Spitze des von S ausgehenden Pfeils angedeutet), so ist dies gleichbedeutend zu der rechts stehenden Struktur:

c)

S aus URS(L)                          S aus URS(L)

=====>                                =====>

$p(A.L | A\,S) \geq p(A.L | A)$.       $p(A.L | A\,\overline{S}) \leq p(A.L | A)$.


d)

$p(A.L | A\,S) > p(A.L | A)$

=====>

S aus URS(L), oder

S erhöht die Wahrsch. von Elementen aus URS(L), oder

S ist ein Folgeknoten von L.


$p(A.L | A\,\overline{S}) > p(A.L | A)$

=====>

S aus INH(A.L), oder

$\overline{S}$ vermindert die Wahrsch. von Elementen aus INH(A.L).


Folgerungen

V sei ein beliebiger Verbund, bestehend aus negierten, unnegierten oder unsicher bestimmten Netzknoten.
Eine Klammer kennzeichne einen Verbund, der aus allen sicher bestimmt vorliegenden Elementen der in der Klammer stehenden Menge besteht.

Voraussetzung ist stets $p(B) > 0$ für Bedingungsverbunde B.

Dann gilt:

1.

$$p(A.L \mid A \underbrace{URS(L)}, \underbrace{INH(A.L)}, V) = p(A.L \mid A \underbrace{URS(L)}, \underbrace{INH(A.L)}),$$

falls V keine Folgeknoten von L enthält.

2.

$$p(A.L \mid A L \underbrace{URS(L)}, \underbrace{INH(L)}, V) = p(A.L \mid A L \underbrace{URS(L)}, \underbrace{INH(L)}).$$

Das zugrunde gelegte Modell wird durch vier weitere Voraussetzungen vervollständigt. Hierzu werden die Bezeichnungen des nachfolgend skizzierten Schemas eingesetzt:

Es bezeichnen:

A Beliebig gewählter, aber feststehender Verbund mit beliebig unnegierten Elementen aus URS(L). Es sei A := $(A1 ... A_k)$.

X Beliebiger Verbund mit negierten oder unnegierten Elementen aus der Menge URS(L) {Elemente in A}. Es sei X := $(X1 ... X_\ell)$.

INH(A.L) Menge der Netzknoten, die auf $A1.L,..., A_k.L$ hemmend einwirken.

INH(X.L) Menge der Netzknoten, die auf $X1.L,..., X_\ell.L$ hemmend einwirken.

I Verbund mit beliebig vielen Knoten, die auf A.L hemmend oder fördernd wirken.

J Verbund mit beliebig vielen Knoten, die auf X.L hemmend oder fördernd wirken.

Es wird gefordert, daß für alle X gilt:

Voraussetzung 1

Glg.5.6    $p((A.L) (X.L) \mid A X) = p(A.L \mid A X) \cdot p(X.L \mid A X).$

Voraussetzung 2

Glg.5.7    $p(A.L \mid A X) = p(A.L \mid A).$

Voraussetzung 3

Glg.5.8    $p(X.L \mid A X) = p(X.L \mid \overline{A1} ... \overline{A}_k X).$

Voraussetzung 4

Glg.5.9    $p(X \mid A) = p(X \mid \overline{A1} ... \overline{A}_k).$

Anhand der spezifischen Gegebenheiten des bearbeiteten Wissensbereichs muß entschieden werden, welche Netzknoten einen kausalen Vorgang A.L, und welche Netzknoten einen kausalen Vorgang X.L beeinflussen. Solche Entscheidungen, die wegen der Komplexität der Vorgänge im allgemeinen nur "Ungefähr-Aussagen" darstellen, bilden einen Teil der Wissensbasis.

Die nachfolgenden Bemerkungen zu den Voraussetzungen 1 und 2 geben eine Hilfestellung, um die angenäherte Erfüllung der geforderten Voraussetzungen leichter abschätzen zu können.

## Zu Voraussetzung 1

I sei ein Verbund mit beliebigen und beliebig vielen Elementen, die hemmend oder fördernd auf A.L wirken.

J sei ein Verbund mit beliebigen und beliebig vielen Elementen, die hemmend oder fördernd auf X.L wirken.

Falls für alle I, J und X

$$p(I\ J\ |\ A\ X) = p(I\ |\ A\ X)\ \cdot\ p(J\ |\ A\ X)$$

erfüllt ist, dann gilt für alle X:

$$p((A.L)\ (X.L)\ |\ A\ X) = p(A.L\ |\ A\ X)\ \cdot\ p(X.L\ |\ A\ X).$$

Da nur I und J auf die kausalen Vorgänge A.L und X.L einwirken, ist die Behauptung richtig, falls gesichert ist, daß die von I und J wiederum ausgehenden kausalen Vorgänge unabhängig voneinander erfolgen. Dies ist der Fall, da gilt:

Ein beliebiger Netzknotenverbund V1, der auf die von I ausgehenden kausalen Vorgänge wirkt, besteht nach den Strukturvoraussetzungen 1 und 2 selbst aus A.L-beeinflussenden Elementen; ein beliebiger Netzknotenverbund V2, der auf die von J ausgehenden kausalen Vorgänge wirkt, besteht selbst aus X.L-beeinflussenden Elementen. Da beliebige Verbunde (I V1) und (J V2) unter der Bedingung (A X) stochastisch unabhängig sind, erfolgen die davon beeinflußten kausalen Vorgänge A.L und X.L unter der Bedingung (A X) stochastisch unabhängig.

## Zu Voraussetzung 2

Ein Teil der Aussage von Voraussetzung 2 bedeutet, daß unter der Bedingung des Vorliegens von $A :=$ $(A1,..., A_k)$ keiner der kausalen Vorgänge $A1.L,...,A_k.L$ durch eines der Einzelereignisse aus URS(L)\ {Elemente in A} gefördert wird. Besitzen dann die Einzelereignisse aus URS(L) \ {Elemente in A} nicht die gemäß Strukturvoraussetzung 1 erforderlichen strukturellen Möglichkeiten zur Förderung von A.L, so besitzt auch jeder Verbund aus solchen Einzelereignissen diese Möglichkeiten nicht.

Entsprechendes gilt für die Voraussetzung 3.

Es wird definiert:

## Definition (Selbstständige Ursache)

Ein aus unnegierten Elementen von URS(L) bestehender Verbund A heißt selbstständige Ursache von L, falls A die Voraussetzungen 1 bis 4 erfüllt.

## 5.3. A.L-Satz

In dem zugrunde gelegten Kausalmodell wird ein Satz zur Bestimmung der Wahrscheinlichkeit eines kausalen Vorgangs formuliert.

## Satz ( A.L-Satz )

A ist eine selbstständige Ursache von L. Dann gilt mit $A := (A1 ... A_k)$:

$$\text{Glg.5.10} \quad p(A.L \mid A) \quad = \quad \frac{p(L \mid A) \; - \; p(L \mid \overline{A1} \; ... \; \overline{A}_k)}{p(\overline{L} \mid \overline{A1} \; ... \; \overline{A}_k)} \quad .$$

$$\text{Glg.5.10'} \quad p(A.L \mid A\,L) \quad = \quad \frac{p(L \mid A) \; - \; p(L \mid \overline{A1} \; ... \; \overline{A}_k)}{p(L \mid A) \cdot p(\overline{L} \mid \overline{A1} \; ... \; \overline{A}_k)} \quad .$$

Beweis:

1.

Aus den Glgn.5.6 und 5.8 ergibt sich für beliebiges X:

$$
\left.
\begin{array}{lcl}
p(X.L \mid A\,X) & = & p(X.L \mid \overline{A1} \; ... \; \overline{A}_k\,X) \\[4pt]
p(X.L \mid A\,X\,\overline{(A.L)}) & = & p(X.L \mid A\,X)
\end{array}
\right\} =====>
$$

$$p(X.L \mid A\,X\,\overline{(A.L)}) \quad = \quad p(X.L \mid \overline{A1} \; ... \overline{A}_k\,X).$$

=====>

$$\frac{p((X.L)\,A\,X\,\overline{(A.L)})}{p(A\,X\,\overline{(A.L)})} \quad = \quad \frac{p((X.L)\,\overline{A1}\;...\overline{A}_k\,X)}{p(\overline{A1}\;...\overline{A}_k\,X)} \quad .$$

=====>

$$\text{Glg.5.11} \quad \frac{p(X\,(X.L) \mid A\,\overline{(A.L)})}{p(X \mid A\,\overline{(A.L)})} \quad = \quad \frac{p(X\,(X.L) \mid \overline{A1}\;...\overline{A}_k)}{p(X \mid \overline{A1}\;...\;\overline{A}_k)} \quad .$$

Mit Glg.5.7 folgt weiter:

$$p(\overline{A.L} \mid A\ X) \quad = \quad p(\overline{A.L} \mid A).$$

$$=====>$$

$$\frac{p((\overline{A.L})\ A\ X)}{p(A\ X)} \quad = \quad \frac{p((\overline{A.L})\ A)}{p(A)}.$$

$$=====>$$

$$p(X \mid A\ (\overline{A.L})) \quad = \quad p(X \mid A).$$

$$=====> \quad \text{(wegen Glg.5.9)}$$

Glg.5.12 $\quad p(X \mid A\ (\overline{A.L})) \quad = \quad p(X \mid \overline{A1}\ ...\overline{A}_k).$

Aus Glg.5.11 ergibt sich mit Glg.5.12:
Für alle X gilt
$p(X\ (X.L) \mid A\ (\overline{A.L})) = p(X\ (X.L) \mid \overline{A1}\ ...\ \overline{A}_k).$
Damit erhält man:
Glg.5.13 $\quad p(L \mid A\ (\overline{A.L})) = p(L \mid \overline{A1}\ ...\ \overline{A}_k).$

2.

Es gilt:

$$p(L\ A) \quad = \quad p(L\ A\ (A.L)) \ + \ p(L\ A\ (\overline{A.L})).$$

$$=====>$$

$$p(L\ A) \quad = \quad p(L \mid A\ (A.L)) \cdot p(A\ (A.L))$$
$$+ \ p(L \mid A\ (\overline{A.L})) \cdot p(A\ (\overline{A.L})).$$

$$=====>$$

$$(\text{ wegen der Beziehung } p(L \mid A\ (A.L)) = 1 \text{ und Glg.5.13 })$$

$$p(L\ A) \quad = \quad p(A\ (A.L)) \ + \ p(L \mid \overline{A1}\ ...\overline{A}_k) \cdot p(A\ (\overline{A.L})).$$

$$=====>$$

$$p(L\ A) \quad = \quad p(A.L \mid A) \cdot p(A) \ + \ p(L \mid \overline{A1}\ ...\overline{A}_k) \cdot p(A)$$
$$- \ p(L \mid \overline{A1}\ ...\overline{A}_k) \cdot p(A.L \mid A) \cdot p(A).$$

=====>

$$p(L\ A)\quad = \quad p(A.L\mid A)\ (p(A)\ -\ p(A)\cdot p(L\mid \overline{A1}\ ...\overline{A}_k))$$
$$+\ p(A)\cdot p(L\mid \overline{A1}\ ...\overline{A}_k).$$

=====>

$$p(A.L\mid A)\ =\ \frac{p(L\ A)\ -\ p(A)\cdot p(L\mid \overline{A1}\ ...\overline{A}_k)}{p(A)\ -\ p(A)\cdot p(L\mid \overline{A1}\ ...\overline{A}_k)}\qquad (Glg.5.10)$$

Die Glg.5.10' gilt wegen:

$$p(A.L\mid A\ L)\ =\ \frac{p((A.L)\ A\ L)}{p(A\ L)}\ =\ \frac{p((A.L)\ A)}{p(A\ L)}\ =\ \frac{p(A.L\mid A)}{p(L\mid A)}.$$

Es soll die Möglichkeit gegeben werden, die Berechnung der Wahrscheinlichkeit des kausalen Vorgangs A.L vorzunehmem, wenn in dem Bedingungsverbund außer A noch
    1. negierte Elemente von URS(L),
    2. unnegierte Elemente von URS(L) und
    3. negierte oder unnegierte Elemente aus INH(A.L) zugelassen sind.
Hierzu dient das nachfolgend angegebene Korollar.

Korollar 1 A ist eine selbstständige Ursache von L.
B ist ein Verbund mit beliebigen und beliebig vielen unnegierten Elementen aus URS(L) {Elemente in A}.
C ist ein Verbund mit beliebigen und beliebig vielen negierten Elementen aus URS(L) {Elemente in A und B}.
D ist ein beliebiger Verbund mit negierten oder unnegierten Elementen, die A.L fördernd oder hemmend beeinflussen, A.L jedoch nicht ganz unterbrechen.
A, B, C, D, L schließen sich nicht gegenseitig aus.
Dann gilt :

$$p(A.L\mid A\ B\ C\ D)\ =\ \frac{p(L\mid A\ B\ C\ D)\ -\ p(L\mid \overline{A1}...\overline{A}_k\ B\ C\ D)}{p(L\mid \overline{A1}...\overline{A}_k\ B\ C\ D)}.$$

$$p(A.L\mid A\ B\ C\ D\ L)\ =\ \frac{p(L\mid A\ B\ C\ D)\ -\ p(L\mid \overline{A1}...\overline{A}_k\ B\ C\ D)}{p(L\mid A\ B\ C\ D)\cdot p(\overline{L}\mid \overline{A1}...\overline{A}_k\ B\ C\ D)}.$$

5.4 Bestimmung der wahrscheinlichsten Ursache des Leitsymptoms Folgende Bezeichnungen werden verwendet:

$$\underline{URS(L)}$$

Verbund, bestehend aus allen Elementen der Menge URS(L), die jeweils negiert oder ungiert enthalten sind.

$$\underline{URS(L)_{uns}}$$

Verbund, bestehend aus allen Elementen der Menge URS(L), die jeweils negiert, unnegiert oder mit einer '-Kennung enthalten. (Die Markierung "uns" erinnert an die unsicher bestimmt vorliegenden Elemente.)

$$\underline{INH(L)}$$

Verbund, bestehend aus allen negierten oder unnegierten Elementen, die inhibitorisch die auf L hinführenden Kausalverweise beeinflussen. Vereinbarungsgemäß besitzen solche Elemente stets eine Zutreffenswahrscheinlichkeit Null oder Eins.

$$\underline{INH(L)_{bek}}$$

Verbund, bestehend aus allen negierten oder unnegierten Elementen der Menge INH(L), deren Zutreffenswahrscheinlichkeit bekannt ist.

$$\underline{INH(L)_{unbek}}$$

Verbund, bestehend aus allen negierten oder unnegierten Elementen der Menge INH(L), deren Zutreffenswahrscheinlichkeit unbekannt ist. Damit gilt:

$INH(L) = INH(L)_{bek} \cup INH(L)_{unbek}$ .

V Verbund, bestehend aus beliebigen und beliebig vielen Netzknoten mit jeweils beliebigen Zutreffenswahrscheinlichkeiten zwischen Null und Eins.

$V_{bek}$ Verbund, bestehend aus beliebigen und beliebig vielen Netzknoten, die eine bereits bekannte Zutreffenswahrscheinlichkeit zwischen Null und Eins aufweisen, und die deshalb zur Berechnung des L-Netzes herangezogen wurden.

$V_{unbek}$ Verbund, bestehend aus beliebigen und beliebig vielen Netzknoten, die eine unbekannte Zutreffenswahrscheinlichkeit aufweisen, und die zur Berechnung des L-Netzes nicht herangezogen wurden.

Nach der aus den Strukturvoraussetzungen 1 und 2 hergeleiteten Folgerung 2 gilt für beliebiges A.L und nicht verschwindende Bedingungsverbunde:

$$p(A.L \mid L, \underline{URS(L)}, \underline{INH(L)}, V) = p(A.L \mid L, \underline{URS(L)}, \underline{INH(L)}).$$

Nach den in den Strukturvoraussetzungen 1 und 2 enthaltenen Aussagen gilt auch:

$$Glg.5.14 \quad p(A.L \mid L, \underline{URS(L)_{uns}}, \underline{INH(L)}, V_{bek}) =$$

$$p(A.L \mid L, \underline{URS(L)_{uns}}, \underline{INH(L)}).$$

Beweis:

Annahme:

Das Gleichheitszeichen in Glg.5.14 gilt nicht.

= = = = =>

Es gibt einen Knoten S aus $V_{bek}$ , der unter der Bedingung

$$(L \underline{,URS(L)_{uns,}} \underline{,INH(L),})$$

die Wahrscheinlichkeit eines in URS(L) enthaltenen, '-gekennzeichneten H-Knotens verändert.

= = = = =>

Widerspruch, da für ein beliebiges $H'_{u,o}$ aus $URS(L)_{uns}$ und ein beliebiges S aus $V_{bek}$ gilt:

$$p(H_{\mu_o} | L \underline{,URS(L)_{uns,}} \underline{,INH(L),}) \quad = \quad p(H_{\mu_o} | H'_{\mu_o}) \ \left.\begin{array}{c} \\ \\ \end{array}\right\} \quad = = = = >$$

$$p(H_{\mu_o} | L \underline{,URS(L)_{uns,}} \underline{,INH(L),}, S) \quad = \quad p(H_{\mu_o} | H'_{\mu_o})$$

$$p(H_{\mu_o} | L \underline{,URS(L)_{\mu ns,}} \underline{,INH(L),}, S) \quad = \quad p(H_{\mu_o} | L \underline{,URS(L)_{\mu ns,}} \underline{,INH(L),})$$

= = = = =>

Die Annahme ist falsch.

= = = = =>

In Glg.5.14 gilt die Gleichheit.

Nun sind zwar voraussetzungsgemäß die Zutreffenswahrscheinlichkeiten für alle Knoten aus URS(L) aufgeklärt, nicht jedoch für die in INH(L) enthaltenen Elemente, deren Existenz im allgemeinen nicht bekannt ist.

Nach den in den Strukturvoraussetzungen 1 und 2 enthaltenen Aussagen gilt für ein beliebiges A.L und einen beliebigen Knoten S aus $V_{bek}$ :

1.

$$p(A.L | L \underline{,URS(L)_{uns,}} S) \quad < \quad p(A.L \ L \underline{,URS(L)_{uns,}})$$

= = = = =>

S aus INH(A.L), oder S erhöht unter der Bedingung

$$(L \underline{,URS(L)_{uns,}})$$

die Wahrscheinlichkeit von Elementen aus INH(A.L).

2.

$$p(A.L | L \underline{,URS(L)_{uns,}} \bar{S}) \quad < \quad p(A.L \ L \underline{,URS(L)_{uns,}})$$

= = = = =>

S aus INH(L) INH(A.L) , oder

$\bar{S}$ vermindert unter der Bedingung

$$\langle L \, \underline{| URS\langle L \rangle_{uus|}} \rangle$$

die Wahrscheinlichkeit von Elementen aus INH(L)\INH(A.L). .

3.

$$p\langle A.L \mid L \, \underline{URS\langle L\rangle_{uus}}, S \rangle \; > \; p\langle A.L \, ( \, L \, \underline{URS\langle L\rangle_{uus}} \rangle$$

$$= = = = = >$$
S aus INH(L)\INH(A.L), oder
S erhöht unter der Bedingung

$$\langle L \, \underline{| URS\langle L\rangle_{uus|}} \rangle$$

die Wahrscheinlichkeit von Elementen aus INH(L)\INH(A.L).

4.

$$p\langle A.L \mid L \, \underline{URS\langle L\rangle_{uus|}} \; \overline{S}\rangle \; > \; p\langle A.L \; L \, \underline{URS\langle L\rangle_{uus|}} \rangle$$

$$= = = = = >$$
S aus INH(A.L) , oder
$\overline{S}$ vermindert unter der Bedingung

$$\langle L \, \underline{| URS\langle L\rangle_{uus|}} \rangle$$

die Wahrscheinlichkeit von Elementen aus INH(A.L).

Wegen dieser Zusammenhänge wird folgende zusätzliche Voraussetzung getroffen:

Zusatzvoraussetzung Für ein beliebiges A.L und einen beliebigen Netzknoten S aus $V_{bek}$ , der nicht in dem Verbund

$$\langle L \, \underline{URS\langle L\rangle_{uus|}} \, \underline{INH\langle L\rangle_{bek|}} \rangle$$

enthalten ist, gilt:
- S ist kein Element aus INH(L) und
- S und $\overline{S}$ verändern unter der Bedingung des Vorliegens von

$$\langle L \, \underline{| URS\langle L\rangle_{uus|}} \, \underline{| INH\langle L\rangle_{bek|}} \rangle$$

die Wahrscheinlichkeit für Elemente aus INH(L)$_{unbek}$ nicht.

Nimmt man die Gültigkeit dieser Zusatzvoraussetzung an, so erhält man für beliebiges A.L:

$$Glg.5.15 \quad p\langle A.L \mid V_{bek} \rangle \; = \; p\langle A.L \mid L \, \underline{URS\langle L\rangle_{uus|}} \underline{INH\langle L\rangle_{bek|}} \rangle.$$

Stellt man solche Beziehungen wie Glg.5.15 für alle auf L hinführenden Kausalverbindungen auf, so erhält man nach den entsprechenden Berechnungen den wahrscheinlichsten der L erzeugenden Vorgänge, wobei das gesamte verfügbaren und relevante Wissen berücksichtigt ist. Damit kennt man die wahrscheinlichste Ursache von L, die den Startzustand des wahrscheinlichsten kausalen Vorgangs bildet.

Beispiel:

Für das in Abb.4.1 enthaltene Element H2 aus URS(L) gilt mit $p(U6|U6') := 0$, $p(U7|U7') := 0$, $p(H4|H4')$ $:= 1$ und $INH(L) := \emptyset$:

$p(H2.L \mid V_{bek}) = p(H2.L \mid \overline{U6\ U7}\ H4\ L\ H2'\ H3')$.

Durch die Einführung von Wahrscheinlichkeiten für kausale Vorgänge ergibt sich die Möglichkeit, Wahrscheinlichkeiten für beliebige Kausalketten in einfacher Weise anzugeben. Es seien A. B. C beliebige Knoten des L-Netzes, für die eine kausale Verbindung von A nach B und von B nach C besteht. Gesucht ist $p((A.B)\ (B.C) \mid V_{bek})$.

Eine solche Wahrscheinlichkeit ergibt sich sofort aus den beschriebenen Verfahren, wenn vorausgesetzt werden hann, daß gilt:

Voraussetzung für die Berechnung der Kausalkette

$\overline{p((A.B)\ (B.C) \mid V_{bek}\ )} = \overline{p(A.B \mid V_{bek}\ )} \bullet \overline{p(B.C \mid V_{bek})}$.

Diese Voraussetzung entspricht der folgenden Forderung: Ein beliebiger Verbund mit Elementen aus URS-(B) ∪ INH(B) ist gegenüber jedem Verbund mit Elementen aus URS(C)∪ INH(C) stochastisch unabhängig unter der Bedingung $V_{bek}$.

Beispiel:

Mit der obigen Voraussetzung gilt in Abb.4.1 für die Kausalkette H1 ---> H2 ---> L:

$p((H1.H2)\ (H2.L) \mid V_{bek}) = p(H1.H2 \mid V_{bek}) \bullet p(H2.L \mid V_{bek})$

$= p(H1.H2 \mid U1\ H1'\ H2') \bullet p(H2.L \mid \overline{U6\ U7}\ H4\ L\ H2'\ H3')$.

## Ansprüche

I) Anspruch 1

Verfahren zur Ermittlung der Wahrscheinlichkeiten fehlerhafter Betriebszustände eines technischen oder biologischen Systems, dadurch gekennzeichnet, daß zunächst ein modular aufgebautes Kausalnetz aufgestellt wird, wobei jeder für den Netzaufbau verwendete Netzknoten sich zusammensetzt aus - der Nummer und dem Namen des Netzknotens,
- beliebig vielen hinführenden Kausalverweisen mit Angabe des verursachenden Knotens,
- beliebig vielen wegführenden Kausalverweisen mit Angabe des verursachten Netzknotens.
- den Uebergangs-Schaltstellen der wegführenden Kausalverweise mit Angabe derjenigen Netzknoten, die den betreffenden Uebergang hemmend beeinflussen;

der Netzaufbau des sogenannten L-Netzes ist dadurch gekennzeichnet, daß man zunächst alle auf den Leitsymptom-Knoten (L-Knoten) hinführende Kausalverweise an der Pfeilanfängen mit Netzknoten besetzt, und daß man dann unter Beachtung beliebig wählbarer Begrenzungsvorschriften so lange die auf diese Weise hinzugekommenen Kausalverweise erneut mit Netzknoten versieht, bis das Netz keine unbesetzten Kausalverweise mehr enthält. oder bis es die durch die Aufbau-Vorschriften definierte Größe und Zusammensetzung besitzt;

das Verfahren ist als nächstes dadurch gekennzeichnet, daß man für alle nicht direkt meßbaren Knoten $H_{\mu}$, $\mu := 1, \ldots , m$, Wertungsumgebungen $WERT(H_{\mu})$ festlegt, wobei die Wertungsumgebung für einen beliebigen Knoten $H_{\mu 0}$ gebildet wird als die Vereinigung der Mengen

- $URS(H_{\mu 0})$, der Menge der unmittelbaren Ursachen von $H_{\mu 0}$,
- $FOL(H_{\mu 0})$, der Menge der unmittelbaren Folgen von $H_{\mu 0}$,
- $DIFF(H_{\mu 0})$, der Menge der von $H_{\mu 0}$ verschiedenen Netzknoten, die unmittelbare Ursache für Elemente aus $FOL(H_{\mu 0})$ sind,
- $INH(H_{\mu 0})$, der Menge der Netzknoten, die auf $H_{\mu 0}$ hinführende Kausalverweise inhibitorisch beeinflussen.
- ∪ INH(X) für alle X aus $FOL(H_{\mu 0})$, der Vereinigungsmenge der Netzknoten mit inhibitorischem Einfluß auf Kausalverweise, die auf Elemente von $FOL(H_{\mu 0})$ hinführen;

das Verfahren ist weiter dadurch gekennzeichnet, daß man aus den Elementen der einzelnen Wertungsumgebungen $WERT(H_{\mu})$ jeweils Wertungsverbunde $W(H_{\mu})$ dadurch erstellt, daß man für beliebiges $H_{\mu 0}$

zunächst alle Elemente aus WERT($H_{\mu 0}$) zu einem Verbund zusammenfaßt, und dann
- nicht direkt meßbare H-Knoten mit einer '-Kennung versieht,
- direkt meßbare Knoten im Falle des unsicheren Vorliegens ebenfalls mit einer '-Kennung und im Fall des sicheren Nicht-Vorliegens mit einer ⁻- Kennung ausstattet,
- direkt meßbare Knoten mit unbekannter Zutreffenswahrscheinlichkeit entfernt,
- einen Knoten aus DIFF($H_{\mu 0}$) dann entfernt, falls die von ihm zusammen mit $H_{\mu 0}$ verursachten Elemente alle eine Zutreffenswahrscheinlichkeit Null aufweisen,
- einen Knoten dann entfernt, falls er über Schaltstellen auf Kausalverweise einwirkt, die zu einem bereits entfernten oder mit Sicherheit nicht vorliegenden Knoten hin- oder von ihm wegführen;
das Verfahren ist schließlich dadurch gekennzeichnet, daß man mit den auf diese Weise gewonnenen Wertungsverbunden (W(Hμ)) die Wertungsgleichungen
$p(H_\mu \mid H_\mu^{'}) = p(H_\mu \mid W(H_\mu))$, $\mu := 1, ..., m$
aufstellt, auf diese Gleichungen jeweils den sogenannten L-Satz anwendet und aus den so erhaltenen m nichtlinearen Gleichungen direkt oder mit Hilfe eines Iterationsverfahrens die m Unbekannten $p(H_\mu \mid H_\mu^{'}$
berechnet;
eine Kennzeichnung des Verfahrens besteht abschließend darin, daß man zur Ermittlung der für die Berechnung benötigten Verbundwahrscheinlichkeiten zunächst eine Zerlegung einsetzt, die für einen Verbund V, bestehend aus $H_{\mu 0}$ und allen, ohne '-Kennung und ohne ⁻ -Kennung geschriebenen Elementen von W($H_{\mu 0}$) durch

$$p(V) = p\left(H_{\mu_o} \mid \underbrace{URS(H_{\mu_o}) \cup INH(H_{\mu_o})}\right) \cdot \overline{//}, \quad \text{mit}$$

$$\overline{//} := \prod_{X \in FOL(H_{\mu})} p\left(X \mid \underbrace{URS(X) \cup INH(X)}\right)$$

gegeben ist, wobei eine unterklammerte Menge einen Verbund mit allen negierten oder unnegierten Elementen dieser Menge darstellt, und daß man den Zahlenwert einer Wahrscheinlichkeit der Form

$$p\left(A \mid \underbrace{URS(A) \cup INH(A)}\right)$$

aus Stichproben entnimmt, die jeweils unter der Bedingung des Vorliegens eines der Elemente aus URS(A) erhoben werden, und die in ihren einzelnen Stichprobenausführungen Angaben über das Vorliegen oder Nicht-Vorliegen für alle Elemente aus {A} $\cup$ URS(A) $\cup$ INH(A) enthalten.

II) Anspruch 2
Verfahren zur Ermittlung der Wahrscheinlichkeiten Kausaler Vorgänge bei technischen und biologischen Systemen, dadurch gekennzeichnet, daß man in einem Kausalnetz für einen beliebigen Netzknoten A und einen beliebigen, von A verursachten Netzknoten L einen kausalen Vorgang " A erzeugt L" (Kurzbezeichnung A.L) definiert, daß man entsprechend auch für einen Netzknotenverbund
$A := (A1 ... A_k)$, k beliebig,
bestehend aus Elementen der L verursachenden Netzknotenmenge URS(L), einen kausalen Vorgang
$A.L := (A1.L \vee ... \vee A_k.L)$
einführen kann, und daß man die Wahrscheinlichkeit eines solchen kausalen Vorgangs dadurch berechnet, daß man

$$p(A.L \mid A) = \frac{p(L \mid A) - p(L \mid \overline{A1}...\overline{A_k})}{p(L \mid \overline{A1}...\overline{A_k})} \quad \text{und}$$

$$p(A.L \mid A L) = \frac{p(A.L \mid A)}{p(L \mid A)}$$

anwendet, wobei für A und jeden beliebigen Verbund X mit Elementen aus URS(L) die Voraussetzungen
$p((A.L)(X.L) \mid A X) = p(A.L \mid A X) \cdot p(X.L \mid A X)$,
$p(A.L \mid A X) = p(A.L \mid A)$,
$p(X.L \mid A X) = p(X.L \mid \overline{A1} ... \overline{A}_k X)$,
$p(X \mid A) = p(X \mid \overline{A1} ... \overline{A}_k)$
erfüllt sein müssen;

das Verfahren ist weiter dadurch gekennzeichnet, daß für einen Netzknotenverbund A := (A1 ... A$_k$), der diese Voraussetzungen erfüllt, auch die Beziehungen

$$p(A.L \mid A\ B\ C\ D) = \frac{p(L \mid A\ B\ C\ D) - p(L \mid \overline{A1}...\overline{A}_k\ B\ C\ D)}{p(L \mid \overline{A1}...\overline{A}_k\ B\ C\ D)},$$

$$p(A.L \mid A\ B\ C\ D\ L) = \frac{p(A.L \mid A\ B\ C\ D)}{p(L \mid A\ B\ C\ D)}\quad \text{mit } p(A\ B\ C\ D\ L) > 0$$

eingesetzt werden können, wobei
- B ein Verbund aus unnegierten Elementen von URS(L),
- C ein Verbund aus negierten Elementen von URS(L),
- D ein Verbund aus negierten oder unnegierten, A.L hemmend beeinflussenden Elementen ist:

ist V$_{bek}$ ein Verbund aus allen je nach ihrer Zutreffenswahrscheinlichkeit eingebrachten Netzknoten, so ergibt sich eine abschließende Kennzeichnung des Verfahrens dadurch,
- daß man $p(A.L \mid V_{bek})$ unter Anwendung des L-Satzes auch dann berechnen kann, wenn V$_{bek}$'-gekennzeichnete Elemente aufweist,
- daß $p(A.L \mid V_{bek})$ die Wahrscheinlichkeit von A.L. unter Berücksichtigung des gesamten verfügbaren Wissens darstellt,
- daß man unter leicht erfüllbaren Voraussetzung aus dem Bedingungsverbund V$_{bek}$ alle Knoten entfernen kann, die keine Elemente aus URS(L) $\cup$ INH(L) sind,
- daß man die entsprechenden Berechnungen für alle auf L hinführenden Kausalvorgänge durchführt und so die wahrscheinlichste Ursache von L erhält, und
- daß man mit analogem Vorgehen auch die Wahrscheinlichkeiten beliebiger Kausalketten berechnen kann, wenn man die Unabhängigkeit der darin enthaltenen kausalen Vorgänge unter der Bedingung V$_{bek}$ voraussetzt.

III) Anspruch 3

Verfahren zur automatisierten Aufstellung eines Gleichungssystems aus den gemäß Anspruch 1 formulier-ten m Wertungsgleichungen
$p(H_\mu \mid H_\mu') = p(H_\mu \mid W(H_\mu))$, $\mu := 1, ... , m$
eines Kausalnetzes, dadurch gekennzeichnet, daß man bei beliebigem H$_{\mu 0}$
$x_{\mu 0} := p(H_{\mu 0} \mid H_{\mu 0}')$ und
a := Anzahl '-gekennzeichneter H-Knoten in W(H$_{\mu 0}$) setzt, und dann Ausdrücke

$$Z0 := \frac{p(H_{\mu_o}\ \tilde{W}(H_{\mu_o}))}{p(H_{\mu_1}) \cdot p(H_{\mu_2}) \cdot ... \cdot p(H_{\mu_a})}\quad \text{und}$$

$$N0 := \frac{p(\tilde{W}(H_{\mu_o}))}{p(H_{\mu_1}) \cdot p(H_{\mu_2}) \cdot ... \cdot p(H_{\mu_a})}$$

bildet, wobei $H_{\mu 1}, ..., H_{\mu a}$ die mit '-Kennung versehenen H-Knoten in W(H$_{\mu 0}$) sind, und $\tilde{W}(H_{\mu 0})$ aus W(H$_{\mu 0}$) dadurch entsteht, daß man in W(H$_{\mu 0}$) alle '-gekennzeichneten H-Knoten an das rechte Ende des Verbundes sortiert und dann die ′-Kennung entfernt;

das Verfahren ist weiter dadurch gekennzeichnet, daß man eine Zahl $\gamma$ mit

$\gamma := 0, \dots , 2^a - 1$,

sowie Ausdrücke $Z_\gamma$ und $N_\gamma$ einführt, wobei man $Z_\gamma$ bzw. $N_\gamma$ aus Z0 bzw. N0 dadurch erhält, daß man in dem Verbund $(H_{\mu o} \ \widetilde{W}(H_{\mu o}))$ bzw. $(\widetilde{W}(H_{\mu o}))$ diejenigen der ursprünglich ′-gekennzeichneten H-Knoten negiert, die an einer Position stehen, an der die binär geschriebene, rechtsbündig auf den jeweiligen Verbund projizierte Zahl $\gamma$ eine Eins aufweist, und daß man dann im Nenner dieselben H-Knoten ebenfalls negiert;

das Verfahren ist abschließend dadurch gekennzeichnet, daß für eine Wertungsgleichung

$p(H_{\mu o} \mid H_{\mu o}^{'}) = p(H_{\mu o}|W(H_{\mu o}))$,

die in $W(H_{\mu o})$ nur einen mit einer ′-Kennung versehenen Knoten $H_{\mu 1}$ aufweist, die gesuchte Systemgleichung

$$x_{\mu o} = \frac{x1 \cdot (Z0 - Z1) + Z1}{x1 \cdot (N0 - N1) + N1}$$

gilt, daß man bei Kenntnis des Zählers einer Systemgleichung für (a - 1) im Wertungsverbund enthaltene, ′-gekennzeichnete H-Knoten den Zähler einer Systemgleichung für a solche H-Knoten dadurch erhält, daß man - alle Summanden des vorgegebenen Zählers mit $x_{\mu_a}$ multipliziert (Schritt 1),
- jeden einzelnen, mit (-1) multiplizierten Summanden erneut hinschreibt (Schritt 2),
- an die binär geschriebenen Indizes der $Z_\gamma$ der ursprünglichen Summanden von rechts eine binäre 0 anfügt (Schritt 3),
- an die binär geschriebenen Indizes der $Z_\gamma$ der mit Schritt 2 hinzugekommenen Summanden von rechts eine binäre 1 anfügt (Schritt 4),
- alle Summanden zusammenfaßt (Schritt 5),
- zu dem so gebildeten Zähler den anfänglich vorhandenen Zähler addiert (Schritt 6),
- an die binär geschriebenen Indizes der mit Schritt 6 hinzugekommenen $Z_\gamma$ von rechts eine binäre 1 anfügt (Schritt 7), daß man dies völlig entsprechend auch für den Nenner durchführen kann, und daß man so bei Vorliegen von beliebig vielen, in $W(H_{\mu o})$ enthaltenen, ′-gekennzeichneten H-Knoten in der Lage ist, die benötigte Gleichung als Teil des gesuchten Gleichungssystem rein mechanisch herzustellen.

IV) Anspruch 4 Anwendung der Verfahren nach Anspruch 1, 2 und 3 für den Bau und für den Betrieb von Computern zur Berechnung der Wahrscheinlichkeiten pathologischer Zustände bei Menschen, Tieren und Pflanzen anhand der festgestellten Symptome oder Merkmale.

V) Anspruch 5 Anwendung der Verfahren nach Anspruch 1, 2 und 3 für den Bau und den Betrieb von Computern zur Berechnung der Wahrscheinlichkeiten fehlerhafter Betriebszustände bei technischen und industriellen Anlagen anhand der festgestellten Merkmale, inbesondere zur Berechnung der Wahrscheinlichkeiten fehlerhafter Betriebszustände bei Computersystemen, sowie zur Erkennung der unbefugten Benutzung solcher Systeme.

VI) Anspruch 6 Anwendung der Verfahren nach Anspruch 1, 2 und 3 für den Bau und den Betrieb von Computern zur Berechnung der Wahrscheinlichkeit, daß bei einem technischen oder biologischen System ein beliebiger Systemzustand A, der auch mit einer Wahrscheinlichkeit kleiner Eins vorliegen darf, einen als mögliche Folge in Betracht kommenden Systemzustand B erzeugt, sowie zur Berechnung der Wahrscheinlichkeit einer beliebigen, aus solchen kausalen Erzeugungsvorgängen zusammengesetzten Kausalkette, inbesondere für epidemiologische Fragestellungen hinsichtlich des Verursachers eines pathophysiologischen Zustands, sowie für pharmakologische Fragestellungen hinsichtlich der Wirkungen von Arzneimitteln.